# EUROPÄISCHE PATENTSCHRIFT

(11) **EP 4 499 454 B1**
(45) Veröffentlichungstag und Bekanntmachung des Hinweises auf die Patenterteilung: **21.01.2026**
(21) Anmeldenummer: 23715973.6
(22) Anmeldetag: 28.03.2023
(51) Int. Cl.: B60R 1/074, B60R 1/072

(54) **VORRICHTUNG ZUM JUSTIEREN EINER SICHTMITTELANORDNUNG, SICHTMITTELEINRICHTUNG UND FAHRZEUG MIT EINER SOLCHEN VORRICHTUNG**
DEVICE FOR ADJUSTING A VIEWING MEANS ARRANGEMENT, VIEWING MEANS ARRANGEMENT AND VEHICLE WITH SUCH A DEVICE
DISPOSITIF DE RÉGLAGE D'UN ENSEMBLE MOYEN DE VISUALISATION, DISPOSITIF DE MOYEN DE VISUALISATION ET VÉHICULE COMPRENANT UN TEL DISPOSITIF

(30) Priorität: 29.03.2022 DE 102022107428
(43) Veröffentlichungstag der Anmeldung: 05.02.2025
(73) Patentinhaber: MCi (Mirror Controls International) Netherlands B.V., 3447 GK Woerden (NL)
(72) Erfinder: VAN STIPHOUT, Paulus Gerardus Maria, 3447 GK Woerden (NL)
(74) Vertreter: V.O.
(86) Internationale Anmeldenummer: PCT/NL2023/050159
(87) Internationale Veröffentlichungsnummer: WO 2023/191622

(56) Entgegenhaltungen:
- WO-A1-2016/076713
- DE-A1- 4 141 657

## Beschreibung

Vorliegende Erfindung betrifft eine Vorrichtung zum Justieren einer Sichtmittelanordnung, wie beispielsweise einer Spiegelanordnung oder einer Kameraanordnung für ein Kraftfahrzeug, umfassend ein Basisteil, einen Montagerahmen und einen Stützrahmen, wobei das Basisteil insbesondere zum Anbringen an einer Karosserie eines Kraftfahrzeuges ausgebildet ist, und der Montagerahmen zur Montage eines Sichtmittels, wie beispielsweise eines Spiegels oder einer Kamera ausgebildet ist.

Derartige Vorrichtungen sind aus dem Stand der Technik, beispielsweise in Form von Außenspiegeln für Kraftfahrzeuge, bekannt. Sie erlauben, meist elektrisch, das Einstellen der Sichtmittelanordnungen an die Erfordernisse eines Kraftfahrzeugbetreibers. So erlauben sie u.a. das Verschwenken der Sichtmittelanordnung meist um mehrere Achsen, beispielsweise in einer Aufwärtsrichtung und einer Abwärtsrichtung, aber auch in einer horizontalen Richtung, um so das Blickfeld an die Erfordernisse des Kraftfahrzeugbetreibers anzupassen. Neben der Adaption des Sichtfeldes, ist darüber hinaus meist die Sichtmittelanordnung zwischen einer Parkposition bzw. einer eingeklappten Position, und einer ausgeklappten Position für den Betrieb des Kraftfahrzeuges möglich. Die WO 2016/076713 A1 offenbart eine Vorrichtung gemäß dem Oberbegriff des Anspruchs 1.

Der Aufbau solcher Vorrichtungen umfasst eine Mehrzahl an Bauteilen, von denen viele miteinander in Kraftkopplung stehen, um das Verschwenken zu erlauben. Darüber hinaus sind meist Schutzeinrichtungen vorgesehen, um beispielsweise beim Einwirken externer Kräfte ein Ausweichen der Sichtmittelanordnung zu ermöglichen, um eine Beschädigung derselben zu verhindern. Neben meist elektrisch angetriebenen Aktoren sind in diesem Fall auch Überlastkupplungen, wie Rutschkupplungen oder dergleichen Sicherheitseinrichtungen vorgesehen.

Der Nachteil der bekannten Vorrichtungen liegt insbesondere in der sehr komplexen und vielteiligen Konstruktion, die nicht nur hohe Kosten in Bezug auf die Teileherstellung und die Teilehaltung, sondern auch beim Zusammenbau der jeweiligen Vorrichtungen nach sich ziehen.

Aufgabe der vorliegenden Erfindung ist es daher, eine kostengünstigere, haltbarere und wenige komplexere Vorrichtung zur Verfügung zu stellen.

Diese Aufgabe wird durch eine Vorrichtung zum Justieren einer Sichtmittelanordnung, eine Sichtmitteleinrichtung und ein Fahrzeug, jeweils versehen mit einer solchen Vorrichtung, gemäß den unabhängigen Ansprüchen gelöst.

Insbesondere wird diese Aufgabe gelöst durch eine Vorrichtung zum Justieren einer Sichtmittelanordnung, wie beispielsweise einer Spiegelanordnung oder einer Kameraanordnung für ein Kraftfahrzeug, umfassend ein Basisteil, einen Montagerahmen und einen Stützrahmen, wobei das Basisteil insbesondere zum Anbringen an einer Karosserie des Kraftfahrzeuges ausgebildet ist, der Montagerahmen zur Montage eines Sichtmittels, wie beispielsweise eines Spiegels oder einer Kamera, ausgebildet ist, der Stützrahmen am Basisteil mittels einer ersten Gelenkanordnung derart angeordnet ist, dass er relativ zum Basisteil nur um eine erste Gelenkachse A1, die sich in einer im Wesentlichen aufwärts verlaufenden Richtung erstreckt, rotierbar ist, und zwar zwischen einer eingeklappten Position, in der der Stützrahmen zum Beispiel im Wesentlichen entlang der Karosserie des Kraftfahrzeuges ausgerichtet ist, und einer ausgeklappten Position, in der der Stützrahmen zum Beispiel im Wesentlichen quer zur Karosserie ausgerichtet ist, der Montagerahmen am Stützrahmen mittels einer zweiten Gelenkanordnung derart angeordnet ist, dass er relativ zum Stützrahmen nur um eine zweite Gelenkachse A2, die sich im Wesentlichen quer zur ersten Gelenkachse A1 erstreckt, schwenkbar ist, die erste Gelenkanordnung eine Gelenkkopflageranordnung umfasst mit einem Gelenkkopf am Basisteil und einer Gelenkpfanne am Stützrahmen, wobei der Gelenkkopf von der Gelenkpfanne aufgenommen ist, die zweite Gelenkanordnung eine Wiegenlageranordnung umfasst, mit wenigstens einem am Montagerahmen angeordneten Lagermittel und wenigstens einem am Stützrahmen angeordneten komplementären Gegenlagermittel, die derart miteinander in Gleitführung stehen, dass der Montagerahmen relativ zum Stützrahmen nur um die zweite Gelenkachse A2 verschwenkbar ist, der Montagerahmen eine Zwischenpfanne aufweist, die zwischen der Gelenkpfanne und dem Gelenkkopf angeordnet ist, die Zwischenpfanne durch das Lagermittel relativ zur Gelenkpfanne um die erste Gelenkachse A1 rotationsfixiert und relativ zum Gelenkkopf zusammen mit der Gelenkpfanne um die erste Gelenkachse A1 rotierbar ist, und wobei optional zwischen dem Gelenkkopf und der Zwischenpfanne wenigstens ein Gleitring angeordnet ist, der zwischen dem Gelenkkopf und der Zwischenpfanne eine Gleitlagerung bildet, über die der Montagerahmen relativ zum Basisteil um die erste Gelenkachse A1 und um die zweite Gelenkachse A2 gleitend rotierbar ist.

Zudem wird diese Aufgabe gelöst durch eine Sichtmittelanordnung und ein Fahrzeug mit jeweils einer solchen Vorrichtung.

Es sei angemerkt, dass im Umfang der Erfindung und in Bezug auf die genannte erste Gelenkanordnung bzw. die Gelenkkopflageranordnung, der Gelenkkopf auch am Stützrahmen angeordnet sein kann und die Gelenkpfanne am Basisteil. Zum einfachen Verständnis und der Konsistenz der vorliegenden Beschreibung, wird insofern also optional unter dem Gelenkkopf auch eine Gelenkpfanne verstanden, wenn dementsprechend dann die Gelenkpfanne am Stützrahmen als Gelenkkopf verstanden wird. Sämtliche hier beschriebenen Ausführungsformen sind auf eine solche Konstruktion identisch übertragbar, wobei die zuvor genannte Substitution von Gelenkpfanne und Gelenkkopf vorgenommen werden muss.

Unter Sichtmittel wird im Umfang der Erfindung, wie erwähnt, u.a. ein Spiegel oder eine Kamera verstanden. Es können aber auch andere Anordnungen und Bauteile verstanden werden, die der besseren Kontrolle eines Kraftfahrzeuges oder dergleichen Fahrzeuges dienen. Hier sind beispielsweise Lidar- oder IR-Sensoren, Tote-Winkel-Anzeigen, Heizeinrichtungen usw. verstanden, die mit einer solchen Sichtmittelanordnung in Wirkverbindung stehen können.

Unter Gelenkkopflagerung wird optional eine Lagerung verstanden, bei der der Gelenkkopf von der Gelenkpfanne derart aufgenommen ist, dass er in der Gelenkpfanne, unter Zwischenschaltung der Zwischenpfanne, um wenigstens eine Achse, und hier um die erste Gelenkachse A1 bewegbar und insbesondere rotierbar ist.

Unter einer Wiegenlageanordnung wird im Umfang der Erfindung optional verstanden, dass ausschließlich eine Relativbewegung zwischen Stützrahmen und Montagerahmen um die zweite Gelenkachse ermöglicht wird. Hier sind optional Gleitlageranordnungen vorgesehen, bei denen die Lagermittel am Montagerahmen mit Gegenlagermitteln am Stützrahmen in Gleitführung stehen. Auf spezielle Ausführungsformen dieser Wiegenlageanordnung wird im Folgenden noch im Detail eingegangen.

Im Umfang der Erfindung wird unter einer aufwärts verlaufenden Richtung optional eine Vertikalrichtung verstanden. Die Aufwärtsrichtung wird optional in Bezug auf die geforderte Ausrichtung der Sichtmittelanordnung und insbesondere des Sichtmittels gewählt. Die Vertikalrichtung kann, insbesondere bei Horizontalausrichtung eines Fahrzeuges, an dem die Vorrichtung angeordnet ist, die Schwerkraftrichtung sein.

Unter einer Pfanne wird im Umfang der Erfindung optional ein konkav geformtes Bauteil verstanden. Eine Innenwandung der Pfanne bildet den konkaven Wandungsteil. Eine Außenwandung bildet den entgegengesetzten Wandungsteil, optional einen evtl. vorhandenen resultierenden konvexen Wandungsteil.

Es ist denkbar, dass am Montagerahmen wenigstens ein Sichtmittel im Wesentlichen starr befestigt und insbesondere alle Sichtmittel im Wesentlichen starr befestigt sind. Die Kombination zwischen Stützrahmen, Montagerahmen und Basisteil und der entsprechenden Lagerausbildung erlaubt es, das Sichtmittel zusammen mit dem Montagerahmen um die erste und die zweite Gelenkachse zu verschwenken, wobei dazu nur eine reduzierte Anzahl an Gelenkbauteilen nötig ist. Das Basisteil bildet dabei ein zentrales Bauteil, das sowohl den Stützrahmen als auch den Montagerahmen aufnimmt, wobei der Montagerahmen, relativ zum Stützrahmen um eine Achse verschwenkbar, am Stützrahmen gelagert ist.

Bei einer Anordnung eines Sichtmittels am Montagerahmen, kann über den Montagerahmen beispielsweise eine Verschwenkbewegung des Sichtmittels um die zweite Gelenkachse, insbesondere in einer Aufwärts- und Abwärtsrichtung erfolgen, während durch die Rotation des Stützrahmens zusammen mit dem Montagerahmen um die erste Achse eine Verschwenkbewegung beispielsweise in eine Einwärts- und Auswärtsrichtung um die erste Gelenkachse erfolgen kann. Entsprechend kann das Sichtmittel beispielsweise zwischen einer eingeklappten und einer ausgeklappten Position verschwenkt werden. Es ist auch möglich, über diese Anordnung eine Sichtwinkelkorrektur des Sichtmittels am Montagerahmen vorzunehmen, beispielsweise hin zur Karosserie des Fahrzeugs und davon weg. Diese Sichtmittelkorrektur bzw. das Verschwenken des Sichtmittels um die erste Gelenkachse kann unabhängig vom Ein- und Ausklappen zwischen eingeklappter und ausgeklappter Position erfolgen. Optional kombiniert die Vorrichtung also sowohl die Bewegung des Sichtmittels, beispielsweise zwischen einer Betriebs- und einer Parkposition, und einer Justierung, um dem Fahrer einen optimalen Sichtwinkel zu bieten.

Optional verläuft eine Haupterstreckungsachse des Basisteils koaxial zur ersten Gelenkachse. Optional verläuft eine Haupterstreckungsachse und insbesondere eine Rotationsachse des Gelenkkopfs und/oder der Zwischenpfanne koaxial zu dieser ersten Gelenkachse. Selbiges gilt optional für den Gleitring, wobei insbesondere ein Kreismittelpunkt auf der erste Gelenkachse angeordnet sein kann. Optional sind der Gelenkkopf und das Basisteil lösbar miteinander verbunden. Es ist aber auch eine integrale Ausbildung möglich. Optional ist der Gelenkkopf in Form einer Aufschiebekappe auf das Basisteil aufschiebbar; wie erwähnt, gilt dies auch bei der Ausbildung des Gelenkkopfes als Gelenkpfanne.

Es gilt optional, dass eine Innenwandung der Zwischenpfanne und eine Außenwandung des Gelenkkopfes unter Bildung eines Relativbewegungsspaltes voneinander beabstandet sind, wobei der Gleitring in diesem Relativbewegungsspalt zwischen Zwischenpfanne und Gelenkkopf unter Lagerpressung gelagert ist. Der Relativbewegungsspalt ist optional derart ausgebildet, dass er sich so zwischen Gelenkkopf und Zwischenpfanne erstreckt, dass bei sämtlichen Relativauslenkungen zwischen Gelenkkopf und Zwischenpfanne kein direkter Kontakt zwischen Gelenkkopf und Zwischenpfanne besteht. Der Gleitring ist optional so ausgebildet, dass er eine Vertikalkraft, insbes. koaxial zur ersten Gelenkachse, vom Montagerahmen auf den Basisteil ableiten kann.

Ein entsprechender Relativbewegungsspalt kann zwischen der Innenwandung der Gelenkpfanne, und der Außenwandung der Zwischenpfanne ausgebildet sein. Dabei garantieren optional die Lagermittel und Gegenlagermittel, dass dieser Relativbewegungsspalt während der Schwenkbewegung des Montagerahmens relativ zum Stützrahmen erhalten bleibt und insbesondere kein Kontakt zwischen Innenwandung der Gelenkpfanne und der Außenwandung der Zwischenpfanne erfolgt.

Durch die Anordnung des Gleitrings zwischen Zwischenpfanne und Gelenkkopf ist eine rotierbare Lagerung des Montagerahmens relativ zum Basisteil um die erste Gelenkachse (zusammen mit dem Stützrahmen) und um die zweite Gelenkachse (für sich alleine) möglich. Durch die Kopplung zwischen Montagerahmen und Stützrahmen, ist die rotierbare Lagerung des Stützrahmens relativ zum Basisteil um die erste Gelenkachse gewährleistet. Die Verwendung des Gleitrings erlaubt dabei eine langlebige Gelenkkopflageranordnung, die sehr geringem Verschleiß unterworfen ist. Insbesondere können Verschmutzungen, die zwischen dem Gelenkkopf und der Zwischenpfanne angeordnet sind, einfach u.a. über den Relativbewegungsspalt abtransportiert werden. Zudem garantiert die Ausbildung des Gleitrings einen gleichbleibenden Bewegungsspielraum zwischen Montagerahmen und Basisteil, da der Gleitring sehr geringen Verformungen unterworfen ist. Auch die Einstellung der für die Rotations- bzw. Schwenkbewegungen nötigen Rotationskraft, wird durch den Gleitring erleichtert, da sich im Laufe der Betriebszeit nur geringe Änderungen des Spiels zwischen Montagerahmen und Basisteil ergeben.

Optional ist der Gleitring derart zwischen dem Gelenkkopf und der Zwischenpfanne angeordnet, dass er eine Lagerung bildet, über die der Montagerahmen und insbesondere die Zwischenpfanne relativ zum Basisteil bzw. dem Gelenkkopf um die zweite Achse verschwenkt werden kann, und insbesondere gleitend verschwenkt werden kann. Zwischen Zwischenpfanne, Gleitring und Gelenkkopf kann auch in diesem Fall eine Gleitlagerung ausgebildet sein. Bei einer Bewegung um die zweite Gelenkachse bewegt sich, insbesondere in diesem Fall, optional der Gleitring relativ zum Gelenckopf und/oder relativ zur Zwischenpfanne um die zweite Gelenkachse. Insbesondere bewegt er sich entlang der Innenwandung der Zwischenpfanne und/oder der Außenwandung des Gelenkkopfes.

Optional ist der Gleitring aus Metall, Keramik oder Glas hergestellt. Optional weist er eine Brinell-Härte zwischen 200 bis 900 HB auf. Durch einen derart ausgebildeten Gleitring wird der Verschleiß der Gelanklageanordnung reduziert. Durch die Ausbildung und Anordnung des Gleitrings zwischen Zwischenpfanne und Gelenkkopf können Schrumpfungen bzw. Vergrößerungen der optional als Kunststoffbauteile hergestellten Montagerahmen, Basisteil und Stützrahmen Rechnung getragen werden, ohne dass sich die grundsätzlichen Eigenschaften der Vorrichtung verändern.

Optional gilt, dass die Außenwandung des Gelenkkopfes und/oder die Innenwandung der Zwischenpfanne wenigstens abschnittsweise eine um die erste Gelenkachse rotationssymmetrische Geometrie aufweisen, insbesondere eine wenigstens abschnittsweise kugelförmige Geometrie. Es ist denkbar, dass der Gelenkkopf außenwandungsseitig bzw. die Außenwandung des Gelenkkopfes, und die Zwischenpfanne innenwandungsseitig bzw. die Innenwandung der Zwischenpfanne als komplementär zueinander ausgebildete geometrische Körper bzw. Flächen ausgebildet sind. Insbesondere können beide als Kugelkörper ausgeführt sein. Es ist aber auch denkbar, relativ zueinander unterschiedliche Geometrien auszubilden. Beispielsweise kann der Gelenckopf wenigstens abschnittsweise als Kugelkörper und die Zwischenpfanne wenigstens abschnittsweise als ein davon abweichender Volumenkörper ausgebildet sein. Beispielsweise kann die Zwischenpfanne abschnittsweise eine Kegelscheibengeometrie aufweisen. Selbiges gilt in umgekehrter Bauweise für den Gelenkkopf.

Auch ist es denkbar, an der Zwischenpfanne und insbesondere der Innenwandlung der Zwischenpfanne und/oder dem Gelenkkopf bzw. der Außenwandung des Gelenckopfes Kanäle anzuordnen, die den Abtransport von Verschmutzungen, und insbesondere Partikeln im Relativbewegungsspalt verbessern. Solche Kanäle können beispielsweise mit ihrer Haupterstreckungsachse in Vertikalrichtung, insbesondere in Richtung der ersten Gelenkachse nach unten verlaufen. Optional ist es auch denkbar, am Gleitring entsprechende Ausnehmungen, Erhebungen, Vertiefungen oder Zwischenräume auszubilden, die den Abtransport von Verschmutzungen im Relativbewegungsspalt ermöglichen. Diese können mit solchen Kanälen in Deckung bringbar sein, um einen verbesserten Abtransport von Verschmutzungen und insbesondere Partikeln zu ermöglichen.

Optional gilt, dass die Zwischenpfanne eine Durchführung aufweist, über die das Basisteil, insbesondere ein Schaft des Basisteils, zum Stützrahmen, optional von einer Außenseite des Stützrahmens zu seiner Innenseite durchführbar ist. Optional ist es denkbar, dass der Schaft dabei derart durch die Durchführung der Zwischenpfanne führbar ist, dass die Zwischenpfanne den Schaft vollständig umgibt. Die Durchführung kann relativ zum Schaft derart komplementär ausgebildet sein, dass abschnittsweise die Ränder der Durchführung (das können u.a. der Durchführung zugewandte Kanten sein, die die Durchführung begrenzen) nicht mit dem Schaft in Kontakt treten. Optional besteht wenigstens abschnittsweise keine Zwängung zwischen Schaft und Durchführung. Es ist denkbar, dass in Teilbereichen die Durchführung bzw. Ränder der Durchführungen als Verschwenkanschlag dienen. Dies gilt insbesondere bei einem Verschwenken des Montagerahmens um die zweite Gelenkachse, wie im Folgenden noch im Detail beschrieben. An einem solchen Verschwenkanschlag kann wenigstens ein Teil des Basisteils und insbesondere ein Schaft verschwenkhemmend anstehen.

Optional gilt, dass eine Durchführungslänge DL der Durchführung, die sich in einer Umfangsrichtung U2 um die zweite Gelenkachse auf der Außenwandung der Zwischenpfanne erstreckt, derart ausgebildet ist, dass in dieser Umfangsrichtung U2 ein Schwenkfreiraum zwischen dem Basisteil und insbesondere dem Schaft des Basisteils und der Zwischenpfanne ausgebildet wird, der eine Bewegung der Zwischenpfanne relativ zum Schaft und insbesondere eine Schwenkbewegung um die zweite Gelenkpfanne erlaubt. Optional ist die Durchführung als ein Langloch ausgebildet, das sich in Richtung der Schwenkbewegungsachse A3 erstrecket. Die Schwenkbewegungsachse A3 verläuft optional quer zur ersten Gelenkachse A1 und zur zweiten Gelenkachse A2. Sie beschreibt die Bewegungsrichtung, die insbesondere die Ränder der Durchführung beim Verschwenken des Montagerahmens um die zweite Gelenkachse relativ zum Basisteil durchlaufen.

Konform zu den obigen Passagen, ist optional eine Durchführung vorgesehen, die als Freiraum in der Zwischenpfanne ausgebildet ist und das Durchführen des Basisteils durch die Zwischenpfanne ermöglicht. Durch diese Durchführung ist optional das Basisteil mit einem daran ausgebildeten Aufnahmeteil durchführbar. Das Aufnahmeteil kann am Gelenkkopf ausgebildet sein. Dieses Aufnahmeteil kann, wie im späteren Verlauf noch beschrieben, beispielsweise der Ausbildung einer Rutsch- oder dergleichen Kupplung dienen. Ein solches Aufnahmeteil ermöglicht optional auch die Anordnung von Fixiermitteln, die beispielsweise den Stützrahmen unter Zwischenpressung der Zwischenpfanne in Richtung des Gelenkkopfes und des Basisteils drängen. Optional ist ein Fixiermittel in Form eines Vorspannmittels, beispielsweise eine Druckfeder vorgesehen, das die Gelenkpfanne und/oder die Zwischenpfanne gegen den Gelenkkopf drängt, und so eine gleichbleibende Lagerpressung zwischen Zwischenpfanne, Gleitring und Gelenkkopf bewirkt.

Ein solches Fixiermittel kann mit dem Basisteil und insbesondere mit dem obigen Aufnahmeteil Kraftgekoppelt sein.

Die Durchführung ist optional so ausgebildet, dass sie ein Verschwenken des Montagerahmens um die zweite Gelenkachse in zwei gegenläufigen Richtungen erlaubt. Auf diese Weise kann beispielsweise ein am Montagerahmen befestigtes Sichtmittel nach oben und unten verschwenkt werden. Wie bereits erwähnt, können dabei Endbereiche und insbesondere Ränder der Durchführung und insbesondere Endbereiche der als Langloch ausgeführten Durchführung als Anschlagmittel dienen, die ein weiteres Verschwenken des Montagerahmens relativ zum Basisteil verhindern. Es können optional auch speziell für diese Funktion vorgesehene Anschlagmittel an der der Zwischenpfanne und/oder Gegenanschlagmittel am Basisteil vorgesehen sein. Optional können insbesondere an Rändern der Durchführung abschnittsweise Anschlagmittel, wie beispielsweise Vorsprünge, aber auch Dämpfungsmittel, vorgesehen sein. Es ist denkbar, dass die Länge der Durchführung und insbesondere die Länge des Langlochs den maximalen Schwenkwinkel um die zweite Gelenkachse definieren. Je länger das Langloch, desto größer ist optional der Schwenkwinkel.

Optional gilt, dass die Zwischenpfanne an ihrer Innenwandung eine, optional zur ersten Gelenkachse konzentrisch verlaufende, obere Lagernut aufweist, in der der Gleitring gelagert ist und optional gegen eine Bewegung relativ zur Zwischenpfanne in der Aufwärtsrichtung fixiert ist, oder der Gelenkkopf an seiner Außenwandung eine, optional zur ersten Gelenkachse konzentrisch verlaufende, untere Lagernut aufweist, in der der Gleitring gelagert und optional gegen eine Bewegung relativ zum Gelenkkopf in der Abwärtsrichtung fixiert ist. Es ist denkbar, dass der Gleitring derart an der Innenwandung der Zwischenwandung und/oder der Außenwandung des Gelenkkopfes gelagert ist, dass er relativ zu einem dieser Bauteile, also der Zwischenpfanne oder dem Gelenkkopf, fixiert ist und sich zusammen mit diesem bei der Rotation um die erste Gelenkachse bewegt. Es ist auch denkbar, den Gelenkkopf freilagernd auszubilden, sodass er sich bei einem Verschwenken des Montagerahmens relativ zum Basisteil bzw. der Zwischenpfanne relativ zum Gelenkkopf um die erste Gelenkachse relativ zu beiden Bauteilen frei bewegt und/oder bei einem Verschwenken des Montagerahmens relativ zum Basisteil um die zweite Gelenkachse frei bewegt. Die Definition der Aufwärtsbewegung und der Abwärtsbewegung bezieht sich insbesondere in diesem Abschnitt optional auf eine Richtung in einer Neutralstellung der Vorrichtung, nämlich in einem Zustand, in dem der Montagerahmen relativ zum Basisteil um die zweite Gelenkachse nicht verschwenkt ist.

Es ist denkbar, eine obere Lagernut derart an der Zwischenpfanne vorzusehen, dass darin der Gleitring derart lagerbar ist, dass er sich bei der Verschwenkbewegung des Montagerahmens relativ zum Basisteil um die zweite Achse, mit dem Montagerahmen mitbewegt und sich dabei optional relativ zu diesem nicht schwenkend bewegt. Es ist denkbar, eine untere Lagernut derart am Gelenkkopf vorzusehen, dass darin der Gleitring derart lagerbar ist, dass er sich bei der Verschwenkbewegung des Montagerahmens relativ zum Basisteil um die zweite Achse, mit dem Gelenkkopf mitbewegt und sich dabei optional relativ zu diesem nicht schwenkend bewegt.

Es ist denkbar, dass die Lagernut derart ausgebildet ist, dass sie eine Kraftübertragung vom Montagerahmen auf den Basisteil und insbesondere den Gelenkkopf erlaubt, sodass eine Vertikalkraft von oben nach unten abgetragen werden kann. Es ist denkbar, die Lagernut derart auszubilden, dass sie eine Umfangsänderung des Gleitringes, insbesondere infolge dieser Vertikalkraft verhindert. Auf diese Weise wird unter anderem sichergestellt, dass der oben genannte Bewegungsfreiraum erhalten bleibt und die Innenwandung der Zwischenpfanne und die Außenwandung des Gelenkkopfes wenigstens abschnittsweise nicht miteinander in Berührung kommen. Die Lagernut kann der Lagefixierung des Gleitrings dienen, sodass es insbesondere nicht zu einem Verkeilen des Gleitrings relativ zur Zwischenpfanne und/oder zum Gelenkkopf kommt. Die Lagernut kann konzentrisch zur ersten Gelenkachse verlaufen.

Es ist grundsätzlich denkbar, eine Mehrzahl an Gleitringen oder eine Mehrzahl an Lagernuten auszubilden, wobei jede Lagernut optional komplementär zum Gleitring ausgebildet ist. Die Lagernut kann, im Querschnitt betrachtet, eine Geometrie aufweisen, in der der Gleitring wenigstens abschnittsweise vollflächig aufgenommen und mit dieser in Lagerpressung steht. Es ist auch möglich, die Lagernut derart auszuführen, dass sie, im Querschnitt betrachtet, nur punktweise mit dem Gleitring in Kontakt steht. Beispielsweise kann der Gleitring, im Querschnitt betrachtet, in seiner Außenwandung kreisförmig oder dergleichen gerundet ausgeführt sein, und die Lagernut mit geraden Innenwandungen ausgeführt sein, sodass sich Punktlager zwischen Lagernut und Gleitring, in Umfangsrichtung optional insbesondere abschnittweise Linienlagerungen ergeben. Über den Umfang des Gleitrings bzw. der Lagernut betrachtet, ergibt sich vorzugsweise insbesondere abschnittsweise eine Linienlagerung zwischen Gleitring und Lagernut. Dies gilt optional auch für eine Lagerausführung ohne Lagernut, also zwischen Zwischenpfanne und Gleitring und/oder Gelenckopf und Gleitring. Eine Linienlagerung kann auch hier optional wenigstens abschnittsweise vorhanden sein. Dies gilt insbesondere, wenn zwischen Gleitring und Zwischenpfanne bzw. zwischen Gleitring und Gelenkkopf Abführkanäle vorhanden sind, die, wie zuvor erwähnt, dem Abführen von Verschmutzungsteilen innerhalb des Relativbewegungsfreiraums dienen.

Optional gilt, dass der Gleitring ein Fixiermittel und die Zwischenpfanne oder der Gelenkkopf ein Gegenfixiermittel aufweisen, oder umgekehrt, die miteinander derart in Eingriff stehen, dass der Gleitring relativ zur Zwischenpfanne bzw. zum Gelenkkopf gegen eine Rotation um die erste Gelenkachse A1 fixiert ist, wobei optional das Fixiermittel wenigstens einen aus der Umlaufachse A4, optional der Gleitringebene, des Gleitrings hervorstehenden Vorsprung und das Gegenfixiermittel wenigstens eine komplementäre Vorsprungaufnahme aufweisen. Dies kann auch umgekehrt gelten.

Optional können das Gegenfixiermittel oder das Fixiermittel in einer oberen Lagernut an der Zwischenpfanne oder einer unteren Lagernut des Gelenkkopfes ausgebildet sein.

Der Gleitring kann beispielsweise derart an der Innenwandung der Zwischenwandung fixiert sein, dass er sich zusammen mit der Zwischenpfanne relativ zum

Basisteil bewegt, wenn das Basisteil relativ zum Montagerahmen um die erste Gelenkachse und/oder die zweite Gelenkachse bewegt wird. Selbiges gilt für eine Anordnung des Gleitrings am Basisteil bzw. dem Gelenkkopf. Ein Fixiermittel kann beispielsweise wenigstens einen Vorsprung am Gleitring aufweisen, der mit einer Vorsprungsaufnahme als Gegenfixiermittel in Kopplung bringbar ist. Auch ein Gegenfixiermittel kann wenigstens einen Vorsprung aufweisen, der mit einer entsprechenden Vorsprungsaufnahme als Fixiermittel koppelbar ist.

Optional ist der Gleitring als ein offener Gleitring ausgebildet, wobei wenigstens ein freier Endbereich des Gleitrings als Fixiermittel ausgebildet ist. Ein solcher freier Endbereich kann optional als Vorsprung ausgebildet sein und weiter optional als aus seiner Umlaufachse A4, optional der Gleitringebene des Gleitrings, herausgebogener Vorsprung.

Optional ist es denkbar, dass wenigstens ein freier Endbereich des Gleitrings abgerundet ist. Dies verhindert eine Beschädigung der Gleitringflächen, also beispielsweise der Innenwandung der Zwischenpfanne und/oder der Außenwandung des Gelenkkopfes.

Optional schneiden sich die zweite Gelenkachse A2 und die erste Gelenkachse A1.

Optional gilt, dass die Wiegenlageranordnung derart ausgebildet ist, dass wenigstens ein Lagermittel des Montagerahmens und wenigstens ein Gegenlagermittel des Stützrahmens wenigstens ein Streifenlager bilden. Optional ist ein Lagermittel wenigstens als ein insbesondere kreisbogenförmiger, konvexer Lagerbogen und/oder ein Gegenlagermittel wenigstens als ein, insbesondere kreisbogenförmiger, konkaver Lagerbogen ausgebildet bzw. weist einen solchen auf. Es sind mehrere solcher Lagerbögen verwendbar. Die Lagermittel und Gegenlagermittel sind dabei vorzugsweise so ausgebildet, dass sie eine Gleitlagerung bilden, wobei optional das Lagermittel auf dem Gegenlagermittel entlanggleiten kann. Es ist denkbar, das Lagermittel über seine gesamte Länge als Lagerstreifen auszubilden. Selbiges gilt optional für das Gegenlagermittel. Es ist denkbar, das Lagermittel in Form einer Mehrzahl an Lagerstreifen, in Reihe nebeneinander und/oder hintereinander angeordnet auszubilden, die auf einem als Streifenlagergegenmittel ausgebildeten Gegenlagermittel entlanggleiten können.

Dies gilt auch umgekehrt. Hier sind beispielsweise ein oder mehrere Lagerfüße als Lagermittel vorgesehen, die auf einem entsprechenden Lagerstreifen als Gegenlagermittel aufsitzen und die Gleitlagerung ermöglichen. Es ist denkbar, zwischen Lagermittel und Gegenlagermittel entsprechende Beschichtungen, Gleitmittel oder dergleichen, die Lagergleitung verbessernder Einrichtungen vorzusehen.

Unter einem Streifenlager wird im Umfang der Erfindung ein Lager verstanden, das eine streifenförmige Lagererstreckung aufweist. Die Krafteinleitung erfolgt erfindungsgemäß bei einem solchen Streifenlager als Flächenlast, bei minimal ausgebildeter Lagerbreite als Linienlast, wobei sich die Flächenlast in einer Haupterstreckungsrichtung, die der Haupterstreckungsrichtung des Streifenlagers entspricht, größer erstreckt als quer zu dieser.

Es ist denkbar, dass die Lagermittel und die Gegenlagermittel integral mit dem Montagerahmen bzw. dem Stützrahmen ausgebildet sind. Beispielsweise kann der Montagerahmen und/oder der Stützrahmen als Gussbauteil hergestellt sein, wobei Lagermittel bzw. Gegenlagermittel integral damit gegossen sind.

Das Streifenlager ist optional als ein Lager mit einer möglichst geringen Lagerbreite in Bezug auf die Lagerlänge ausgebildet. Das Streifenlager weist vorzugsweise eine Lagerbreite auf, die 10 %, optional wenigstens weniger als 8 %, weiter optional weniger als 5 % der Lagerlänge umfasst. Optional ist das Streifenlager derart ausgebildet, dass es eine Linienlagerung bildet. Unter Lagerlänge wird die Länge des Lagers in der Relativbewegungsrichtung von Lagermittel und Gegenlagermittel verstanden. Die Lagerbreite verläuft quer dazu.

Optional gilt, dass wenigstens ein Lagermittel an der Außenwandung der Zwischenpfanne, und wenigstens ein Gegenlagermittel an der Innenwandung der Gelenkpfanne ausgebildet ist. Im Umfang der Erfindung ist die Innenwandung der Gelenkpfanne optional die Wandung, die die Lagerfläche der Gelenkpfanne bildet und dem Gelenkkopf gegenüberliegt. Die Außenwandung der Zwischenpfanne ist optional die Wandung, die außenseitig die Zwischenpfanne bildet und der Gelenkpfanne gegenüberliegt. Die Außenwandung des Gelenkkopfes ist optional die Wandung, die den Gelenkkopf außenseitig bildet und der Zwischenpfanne gegenüberliegt.

Optional gilt, dass Lagermittel und Gegenlagermittel in dem Bereich angeordnet sind, in dem auch die Gelenkkopflagerung ausgebildet ist. Optional sind eine Mehrzahl an Lagermitteln und Gegenlagermitteln relativ zueinander diametral zur ersten Gelenkachse ausgebildet. Optional sind Lagermittel als Sektoren eines Rotationskörpers ausgebildet, wobei die Rotationsachse dieses Rotationskörpers auf der zweiten Gelenkachse liegt. Bei einer solchen Ausführungsform ist beispielsweise das Lagermittel als ein Lagerbogen ausgeführt, dessen Mittelpunkt auf der zweiten Gelenkachse liegt. Selbiges gilt für das Gegenlagermittel. Die Sektoren der Rotationskörper von Lagermittel und Gegenlagermittel weisen vorzugsweise unterschiedliche Radien auf. Lagermittel und Gegenlagermittel weisen vorzugsweise Lagerflächen auf, die wenigstens abschnittsweise komplementär zueinander ausgebildet sind.

Es ist denkbar, dass, wie im Folgenden noch beschrieben, Lagermittel und/oder Gegenlagermittel ausgebildet sind, und mit entsprechenden Aktoren und insbesondere Aktoren, die eine elektrische oder dergleichen maschinell getriebene Verschwenkung der Sichtmittelanordnung erlauben, in Wirkverbindung stehen oder entsprechende Angriffsmittel für diese Aktoren bilden.

Optional gilt, dass wenigstens ein Lagermittel und wenigstens ein Gegenlagermittel Seitenführungsmittel aufweisen, über die eine Fixierung des Lagermittels relativ zum Gegenlagermittel in Richtung der zweiten Gelenkachse bereitgestellt wird. Solche Lagermittel und Gegenlagermittel können dann beispielsweise eine Gleitführung bilden, die ein Verschwenken um die zweite Gelenkachse erlauben, aber jede andere Bewegung, insbesondere in eine Richtung, die von dieser zweiten Gelenkachse abweicht, verhindern. Hier sind beispielweise Bewegungen blockierbar, die translatorisch in Richtung der zweiten Gelenkachse verlaufen. Eine solche translatorische Fixierung kann auch über den Lagersitz des Gleitrings zwischen Zwischenpfanne und Gelenckopf zur Verfügung gestellt werden. Hier ist insbesondere eine Fixierung aufgrund der geometrischen komplementären Ausbildung zwischen Zwischenpfanne und Gelenkkopf erzielbar.

Um obige Fixierung zwischen Lagermittel und Gegenlagermittel zu erreichen, können beispielsweise Seitenführungen an den Lagermitteln und/oder Gegenlagermitteln vorgesehen sein, die miteinander insbesondere in einer Richtung der zweiten Gelenkachse miteinander in Gleitführung stehen. Es ist auch denkbar, Lagermittel und Gegenlagermittel derart auszuführen, dass eine Fixierung zwischen Zwischenpfanne und Gelenkpfanne in einer Richtung entlang der ersten Gelenkachse und insbesondere gegen eine Fixierung voneinander weg gewährleistet ist. Bei einer solchen Ausführungsform kann das Lagermittel relativ zum Gegenlagermittel eine Unterschneidung aufweisen, die diese Fixierung herstellt. Dies ist optional auch umgekehrt möglich.

Optional gilt, dass wenigstens eine Bogenachse wenigstens eines als konvexer Lagerbogen ausgebildeten Lagermittels und/oder eine Bogenachse wenigstens eines als konkaver Lagerboden ausgebildeten Gegenlagermittels koaxial zur zweiten Gelenkachse verläuft. Unter Bogenachse wird die Achse verstanden, entlang der der Lagerbogen bzw. Gegenlagerbogen mit einem bestimmten Radius verläuft. Konkav und konvex beziehen sich optional auf die Anordnung des Lagerbogens am Bauteil. Beide, Lagerbögen und Gegenlagerbogen verlaufen optional um dieselbe Gelenkachse. Ein konkaver Lagerbogen bildet optional auf seiner konkaven Innenseite eine Lagerfläche, ein konvexer Lagerbogen bildet optional auf seiner Außenseite eine konvexe insbesondere komplementäre Lagerfläche.

Optional gilt, dass der Montagerahmen relativ zum Stützrahmen über ein Festlegemittel, insbesondere wenigstens einen Fixierbolzen, der sich parallel zur zweiten Gelenkachse zwischen dem Montagerahmen und dem Stützrahmen erstreckt und an diesem über Achslagermittel gelagert ist, gegen eine Bewegung in Richtung der ersten Gelenkachse fixiert ist. Eine Fixierung erfolgt optional in Richtung der ersten Gelenkachse gegen ein voneinander Wegbewegen des Montagerahmens und des Stützrahmens. Eine Anordnung von Festlegemittel und Achslagermittel kann optional derart ausgebildet sein, dass sie ein Lagermittel und ein Gegenlagermittel für die Wiegenlageanordnung bilden. Insbesondere in einem solchen Fall ist das Festlegemittel optional dann als Lagerbolzen ausführbar, während das Gegenlagermittel als wenigstens ein Langloch ausgebildet ist, durch das der Bolzen durchführbar und entlang der Bogenachse des Langlochs bewegbar ist, sodass ein Verschwenken zwischen Montagerahmen und Stützrahmen ermöglicht wird.

Optional gilt, dass die Vorrichtung ein, optional elektrisches, erstes Betätigungsmittel umfasst, mit einem Antriebsgetriebe, das mit einem Abtriebsgetriebe am Basisteil, insbesondere an einem Schaft, diesen optional wenigstens teilweise umgebend, in Kraftkopplung steht, sodass der Stützrahmen relativ zum Basisteil mittels des Betätigungsmittels rotierbar ist. Optional überträgt das Betätigungsmittel auf das Antriebsgetriebe eine Kraft, die dann über die Kraftkopplung zwischen Antriebsgetriebe und Abtriebsgetriebe in eine Relativrotation zwischen Basisteil und Stützrahmen umgesetzt wird. Optional ist es auch denkbar, dass ein optional elektrisches, zweites Betätigungsmittel vorgesehen ist, mit einem Antriebsgetriebe, das mit einem Abtriebsgetriebe am Montagerahmen und insbesondere an wenigstens einem Lagermittel des Montagerahmens in Kraftkopplung steht, sodass der Montagerahmen relativ zum Stützrahmen verschwenkbar ist. Es ist auch denkbar, das Abtriebsgetriebe am Gegenlagermittel vorzusehen, wenn dieses am Montagerahmen vorgesehen ist. Antriebsgetriebe und Abtriebsgetriebe können beispielsweise als Zahnradkonstruktion, die miteinander in Kraftkopplung stehen, ausgebildet sein. Am Lagermittel bzw. Gegenlagermittel kann beispielsweise ein Zahnradbogen vorgesehen sein, mit dem ein Gegenzahnrad, insbesondere ein Schneckenzahnrad, kraftgekoppelt ist. Optional ist die Kraftkopplung zwischen Antriebsgetriebe und Abtriebsgetriebe derart ausgebildet, dass eine Schwenkversperrung gebildet wird, wenn eine externe Kraft auf die Vorrichtung aufgebracht wird, die ohne diese Kraftkopplung ein Verschwenken des Basisteils relativ zum Montagerahmen bzw. ein Verschwenken des Stützrahmens relativ zum Montagerahmen bewirken würde. Eine solche Sperrung kann eine Sperrentkopplung aufweisen, wenn eine Schwellenkraft überschritten wird. Solche Konstruktionen können beispielsweise Rutschkupplungen oder dergleichen Überlastkupplungen sein.

Optional gilt, dass das erste und das zweite Betätigungsmittel beide am Stützrahmen und insbesondere in einem Innenraum eines solchen Stützrahmens angeordnet sind.

Optional gilt, dass der Montagerahmen den Stützrahmen wenigstens teilweise umschließt und optional der Stützrahmen in Form einer Wiege innerhalb des Montagerahmens angeordnet und gelagert ist. Es ist denkbar, dass der Stützrahmen innerhalb des Montagerahmens im Wesentlichen vollständig von diesem umschlossen und/oder seinerseits unter Bildung eines Innenraumes im Wesentlichen vollständig geschlossen ist. Bei der Anordnung insbesondere der Betätigungsmittel, aber auch von Antriebsgetriebe und/oder Abtriebsgetriebe, am Stützrahmen ergibt sich bei einem solchen geschlossenen Stützrahmen eine sichere Abkapselung der meist empfindlichen Bauteile. Es ist auch denkbar, den Stützrahmen derart als Modul auszubilden, dass er fertig konfektioniert, insbesondere zusammen mit verbauten Betätigungsmitteln und entsprechenden Getrieben, in den Montagerahmen eingesetzt werden kann. Nach dem Einsetzen des Stützrahmens in den Montagerahmen bzw. nach der Ausbildung der Wiegenlageanordnung zwischen Stützrahmen und Montagerahmen kann dann optional eine Sichtmittelkappe am Montagerahmen angeordnete werden sodass optional der Stützrahmen im Wesentlichen vollständig umschlossen ist. Die Sichtmittelkappe umfasst optional ein Sichtmittel. Es kann auch ein Sichtmittel am Montagerahmen angeordnet werden. Das Sichtmittel umfasst optional eine Sichtmittelkappe, die den Stützrahmen dann im Wesentlichen vollständig umgibt. Durch die Ausbildung des Stützrahmens als Träger insbesondere für die Bestätigungsmittel und Getriebe ergibt sich eine Konstruktion, bei der der Montagerahmen sehr schlank ausgebildet werden kann. Insbesondere ist es denkbar, am Montagerahmen lediglich sehr dünne und in ihrem Volumen reduzierte Bauteile, wie beispielsweise einen Spiegel, eine Kamera oder einen Sensor, zu befestigen.

Optional gilt, dass die Antriebs- und/oder Abtriebsgetriebe eine Rotationssperre bilden, sodass eine Relativbewegung zwischen Stützrahmen und Basisteil infolge eines von extern auf den Stützrahmen aufgebrachten Drehmoments um die erste Gelenkachse gesperrt ist, wobei optional eine Rutsch- oder dergleichen Überlastkupplung vorgesehen ist, die beim Einwirken eines festgelegten Überlast-Drehmoments auf den Stützrahmen, zum Beispiel als Ergebnis eines Objekts oder einer Person, das/die mit einem seitlichen Ende eines Sichtmittels kollidiert, mit der der Stützrahmen in Kraftkopplung stehe, die Rotationssperre gelöst wird. Eine solche Konstruktion kann auch zwischen Stützrahmen und Montagerahmen vorgesehen sein, wenn beispielsweise ein festgelegtes Überlast-Drehmoment auf das Sichtmittel am Montagerahmen wirkt.

Wie eingangs bereits erwähnt, betrifft die Erfindung auch eine Sichtmitteleinrichtung, versehen mit einer hier beschriebenen Vorrichtung, und ein Fahrzeug, versehen mit einer solchen Vorrichtung. Aus Redundanzgründen wird hier nicht im Detail auf entsprechende Ausführungsformen eingegangen, sondern auf sämtliche Definitionen der Vorrichtung verwiesen, die an der entsprechenden Sichtmitteleinsichtung bzw. dem Fahrzeug ausgebildet sein können.

Weiter Ausführungsformen der Erfindung ergeben sich aus den Unteransprüchen.

Im Folgenden werden Ausführungsformen der Erfindung anhand der beiliegenden Zeichnungen näher erläutert. Hierbei zeigen:
- Fig. 1: eine teilzerlegte räumliche Darstellung einer ersten Ausführungsform der erfindungsgemäßen Vorrichtung;
- Fig. 2: einen Querschnitt durch die Ausführungsform gemäß Fig. 1;
- Fig. 3: eine weitere teilzerlegte räumliche Darstellung der Ausführungsform gemäß Fig. 1;
- Fig. 4: eine teilzerlegte räumliche Detaildarstellung der Ausführungsform gemäß Fig. 3;
- Fig. 5 - 10: teilgeschnittene Darstellungen einer weiteren Ausführungsform der erfindungsgemäßen Vorrichtung;
- Fig. 11: eine Detaildarstellung eines Fixiermittels gemäß der Darstellung aus Fig. 10;
- Fig. 12: eine Darstellung einer Ausführungsform des erfindungsgemäßen Gleitrings;
- Fig. 13: eine teilgeschnittene Darstellungen einer weitere Ausführungsform der erfindungsgemäßen Vorrichtung;
- Fig. 14: eine Detaildarstellung gemäß der Darstellung aus Fig. 13 eingezeichnet;
- Fig. 15: eine Darstellung einer weiteren Ausführungsform des erfindungsgemäßen Gleitrings; und
- Fig. 16: eine Detaildarstellung eines Basisteils der Ausführungsform gemäß Fig. 13.

Im Folgenden werden für gleiche und gleich wirkende Bauteile dieselben Bezugsziffern verwendet, wobei bisweilen zur Unterscheidung Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier relevante technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um eine Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen miteinschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angeben, jedoch das Vorhandensein oder das Hinzufügen eines oder mehrerer anderer Merkmale nicht ausschließen. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen beschränkt ist. Vielmehr sind die Ausführungsformen hier angegeben, damit die vorliegende Offenbarung ausführlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben. Beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Abschnitten oder Ansprüchen aufgeführt werden, soll nicht angeben, dass eine Kombination dieser Maßnahmen nicht vorteilhafterweise vorgenommen werden kann. Insbesondere sollen alle denkbaren Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

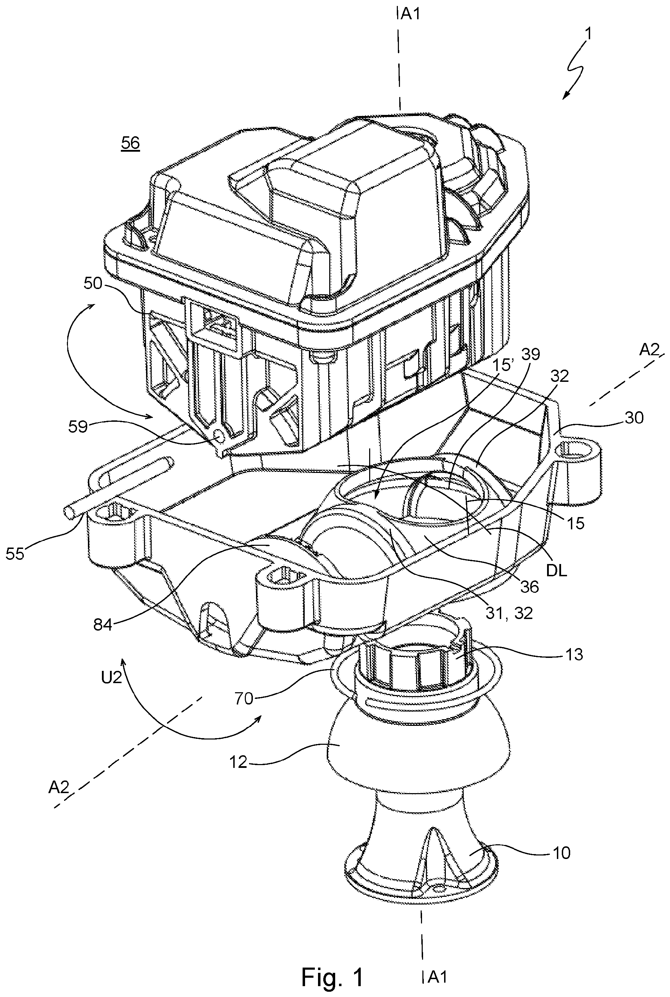

Die Figuren 1 bis 4 zeigen in unterschiedlichen Darstellungen eine erste Ausführungsform der erfindungsgemäßen Vorrichtung. Auch diese Vorrichtung ist zum Justieren einer Sichtmittelanordnung, wie beispielsweise einer Spiegelanordnung oder einer Kameraanordnung für ein Kraftfahrzeug geeignet. Diese Anordnungen sind jedoch in den Darstellungen nicht gezeigt, sie sind aus dem Stand der Technik bekannt.

Die erfindungsgemäße Vorrichtung umfasst einen Basisteil 10, einen Montagerahmen 30 und einen Stützrahmen 50. Wie bereits erwähnt, ist das Basisteil 10 insbesondere zum Anbringen an einer Karosserie des Kraftfahrzeuges ausgebildet. Eine solche Anbringung kann starr erfolgen, sodass insbesondere mit Bezug auf Fig. 1 das Basisteil als Fixpunkt der Vorrichtung dienen kann.

Der Montagerahmen 30 ist derart ausgebildet, dass er zur Montage eines Sichtmittels, beispielsweise eines Spiegels, einer Kamera, aber auch entsprechender Sensormittel oder weiterer Bauteile, die insbesondere der Sicht- und Sicherheitsverbesserung im Fahrbetrieb eines Fahrzeuges dienen, ausgelegt ist. Dieses Sichtmittel kann am Montagerahmen 30 im Wesentlichen starr befestigt werden, sodass es sich, sobald sich der Montagerahmen relativ zum Basisteil 10 bewegt, ebenfalls bewegt. Erfindungsgemäß ist optional zwischen Montagerahmen und Sichtmittel keine weitere Einstellvorrichtung, also bspw. keine Gelenkeinordnung, kein Aktormittel etc. vorgesehen, um das Sichtmittel relativ zum Montagerahmen zu bewegen.

Der Stützrahmen 50 ist am Basisteil 10 mittels einer ersten Gelenkanordnung derart anordbar, dass er relativ zum Basisteil nur um eine erste Gelenkachse A1 rotierbar ist. Diese erste Gelenkachse A1 verläuft im Wesentlichen in einer aufwärts verlaufenden Richtung. Zur Definition des Begriffes "aufwärts" wurde bereits im einleitenden Teil Stellung genommen. Der Stützrahmen 10 ist dabei derart rotierbar, dass er beispielsweise zwischen einer ausgeklappten, beispielsweise einer Fahrposition, und einer eingeklappten Position, beispielsweise einer Parkposition, verschwenkbar ist. Da die erste Gelenkanordnung, wie im Folgenden noch beschrieben, als Gelenkkopflageranordnung ausgebildet ist und der Stützrahmen 10 sich um die erste Gelenkachse A1 verschwenken lässt, wird dieses Verschwenken auch als Rotieren bezeichnet, wobei eben der Stützrahmen 50 um die erste Gelenkachse A1 relativ zum Basisteil 10 rotiert. Optional sind dabei die Teile dieser Gelenkanordnung konzentrisch mit ihren Gelenkflächen um die erste Gelenkachse A1 angeordnet.

Wie im einleitenden Teil beschrieben, kann die ausgeklappte Position auch definiert werden als eine Position, in der der Stützrahmen 50 zum Beispiel im Wesentlichen quer zur Karosserie ausgerichtet ist. Eine eingeklappte Position kann definiert werden, dass dabei der Stützrahmen zum Beispiel im Wesentlichen entlang der Karosserie des Fahrzeuges ausgerichtet ist. Wie im Folgenden noch beschrieben, ist dabei der Stützrahmen derart mit dem Montagerahmen gekoppelt, dass er zusammen mit dem Montagerahmen um die erste Rotationsachse rotierbar ist.

Der Montagerahmen 30 seinerseits, ist am Stützrahmen 50 mittels einer zweiten Gelenkanordnung derart angeordnet, dass er relativ zum Stützrahmen 50 nur um eine zweite Gelenkachse A2 verschwenkbar ist. Wie insbesondere in Fig. 1 dargestellt, verläuft diese zweite Gelenkachse quer zur ersten Gelenkachse.

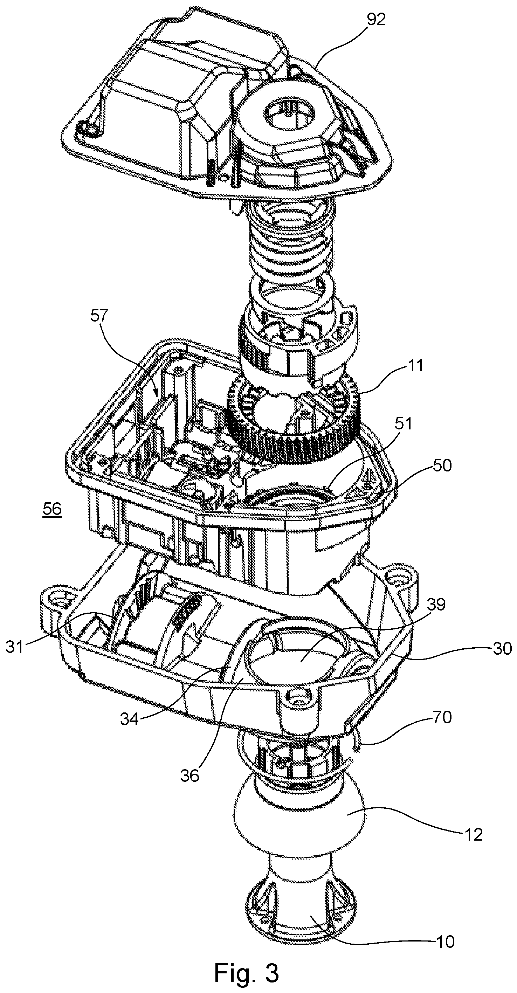

Wie insbesondere in den Figs. 1 und 3 erkennbar, ergibt optional die Anordnung zwischen Stützrahmen und Montagerahmen mittels der Wiegelageranordnung eine Wiegenkonstruktion, wobei der Stützrahmen in Form einer Wiege innerhalb des Montagerahmens angeordnet ist. Bei der in Fig. 1 dargestellten Ausführungsform ist nur ein unterer Teil des Montagerahmens 30 dargestellt. Es ist denkbar, dass der Montagerahmen 30 durch eine Kappe und insbesondere eine Sichtmittelkappe derart ausgebildet ist, dass er den Stützrahmen vollständig umgibt. Auch ein Sichtmittel kann als eine solche Kappe ausgebildet sein, bzw. eine solche aufweisen. Ein Verschwenken des Stützrahmens relativ zum Montagerahmen ist insofern im Inneren eines derart ausgebildeten Montagerahmens 30 möglich.

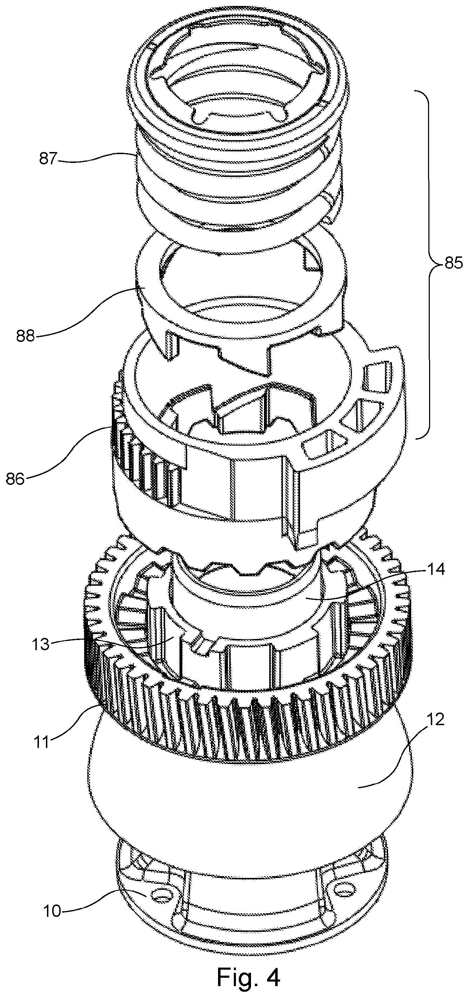

Der Stützrahmen 50 seinerseits kann ebenfalls als geschlossenes bzw. teilgeschlossenes Bauteil ausgeführt sein (siehe Fig. 1). Optional enthält er auf seiner Innenseite 57 (siehe Fig. 3) Betätigungsmittel, wie beispielsweise Motoren und insbesondere elektrisch angetriebene Motoren, über die eine Verschwenkung des Montagerahmens 30 relativ zum Stützrahmen 50 und des Stützrahmens 50 relativ zum Basisteil 10 ermöglicht wird. Zusätzlich zu diesen Betätigungsmitteln, die der Einfachheit halber bei den Figuren nicht dargestellt sind, können im Stützrahmen entsprechende Antriebsgetriebe vorgesehen sein, die mit den Betätigungsmitteln in Kraftkopplung stehen. Die Antriebsgetriebe ihrerseits können dann mit entsprechenden Abtriebsgetrieben (siehe beispielsweise Fig. 4, Bezugszeichen 11 oder Fig. 3 Bezugszeichen 31) in Kraftkopplung stehen, sodass damit die entsprechenden Rotations- und Schwenkbewegungen möglich sind. Auch Abtriebsgetriebe können im Stützrahmen angeordnet sein.

Die erste Gelenkanordnung umfasst eine Gelenkkopflageranordnung, mit einem Gelenkkopf 12 am Basisteil 10, und einer Gelenkpfanne 51 am Stützrahmen 50, wobei der Gelenkkopf 12 von der Gelenkpfanne 51 aufgenommen ist. Wie im einleitenden Teil bereits erläutert, ist es auch möglich, die Vorrichtung entsprechend invertiert auszubilden, wobei der Gelenkkopf dann am Stützrahmen 50 und die Gelenkpfanne am Basisteil 10 ausgebildet ist. Sämtliche mit dieser Anordnung in Verbindung stehenden weiteren Bauteile sind dann entsprechend adaptiert auszubilden. Dies gilt natürlich auch für alle Merkmale, die in Bezug auf diese Bauteile und deren Anordnung relativ zum Basisteil und zum Stützrahmen hier erwähnt sind.

Der Gelenkkopf 12 ist bei dieser Ausführungsform lösbar mit dem Basisteil 10 verbunden. Er ist als Steckkopf ausgebildet, sodass er über einen Schaft 14 des Basisteils auf das Basisteil aufgeschoben und dort optional um die erste Gelenkachse A1 fixiert gelagert ist. Der Gelenkkopf 12 kann darüber hinaus Aufnahmemittel 13 für das Abtriebsgetriebe 11 und/oder für weitere Kupplungsvorrichtungen, beispielsweise eine Rutschkupplung oder eine dergleichen Überlastkupplung 85 aufweisen. Diese Überlastkupplung kann beim Einwirken eines festgelegten Überlast-Drehmoments auf den Stützrahmen 50, aber natürlich auch auf den Montagerahmen 30, der mit dem Stützrahmen 50 gekoppelt ist, und insbesondere auf ein am Montagerahmen 30 angeordnetes Sichtmittel, eine Kraftkopplung insbesondere zwischen dem Antriebs- und Abtriebsgetriebe zwischen Stützrahmen und Basisteil freigeben, sodass eine Notfallrotation ermöglicht wird. Eine solche Notfallrotation ist beispielsweise das Einklappen eines Außenspiegels beim Einwirken einer externen Belastung, die ein Überlast-Drehmoment bewirkt. Exemplarisch ist die Überlastkupplung 85 hier mit einer Mehrzahl an Kupplungsringen 86, 88 versehen, die von einer Druckfeder 87 kraftkoppelnd unter Zwischenschaltung des Stützrahmens und des Abtriebsgetriebe 11 gegen das Basisteil 10 beziehungsweise den Gelenkkopf 12 drücken. Erfindungsgemäß sind die Teile der Überlastkupplung ebenfalls im Innenraum 57 des Stützrahmens anordbar. Zur Montage weist der Stützrahmen optional eine Abdeckung 92 auf, die lösbar am Stützrahmen 50 befestigt ist. Bei dieser Ausführungsform kann die Abdeckung 92 derart ausgebildet sein, dass sie die für die Überlastkupplung 85 nötige Vorspannung auf die Druckfeder 87 aufbringt.

Der Gelenkkopf 12 und die Gelenkpfanne 51 sind optional derart ausgebildet, dass die Gelenkpfanne 51 den Gelenkkopf 12 wenigstens teilweise umgibt. Optional ist die Gelenkpfanne 51 derart ausgebildet, dass sie den Gelenkkopf 12 maximal im Wesentlichen halbschalenförmig umgibt, sodass, unter Abwesenheit etwaiger Fixiermittel, der Gelenkkopf 12 insbesondere in Richtung der ersten Gelenkachse A1 in die Gelenkpfanne 51 einführbar ist.

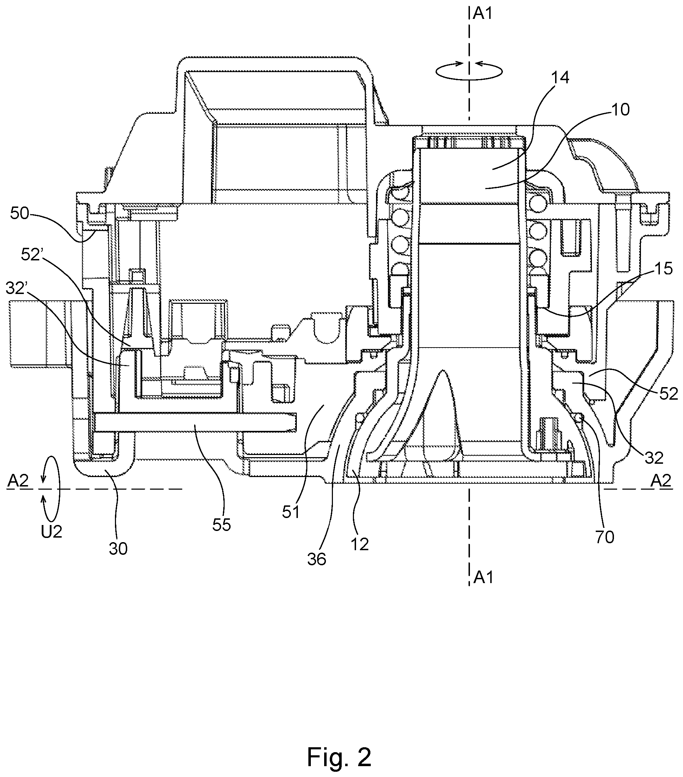

Wie in den Figs. 1 und 2 dargestellt, weist der Montagerahmen 30 eine Zwischenpfanne 36 auf, die zwischen der Gelenkpfanne 51 und dem Gelenkkopf 12 angeordnet ist. Diese Zwischenpfanne 36 ist derart ausgebildet, dass sie ebenfalls von der Gelenkpfanne 51 aufgenommen werden kann. Die Zwischenpfanne ist auch so ausgebildet, dass sie den Gelenkkopf aufnehmen kann. Auch hier gilt die zuvor gegebene Definition der Ausbildungen der Zwischenpfanne und des Gelenkkopfes beziehungsweise der Zwischenpfanne und der Gelenkpfanne, um das gegenseitige Einführen und Aufnehmen zu erlauben.

Wie insbesondere in Fig. 2 dargestellt, bilden die Gelenkpfanne, die Zwischenpfanne und der Gelenkkopf eine Lagenanordnung, wobei die äußere Lage, nämlich die Gelenkpfanne, und die innerste Lage, nämlich der Gelenkkopf, die Zwischenpfanne zwischen sich einschließen.

Wie weiter dargestellt, ist neben der ersten Gelenkanordnung, ausgebildet als Gelenkkopflageranordnung, eine zweite Gelenkanordnung in Form einer Wiegenlageranordnung vorgesehen. Diese umfasst wenigstens ein am Montagerahmen angeordnetes Lagermittel 32, und wenigstens ein am Stützrahmen 50 angeordnetes komplementäres Gegenlagermittel 52. Diese stehen derart miteinander in Gleitführung, dass der Montagerahmen 30 relativ zum Stützrahmen 50 über diese Lagermittel und Gegenlagermittel nur um die zweite Gelenkachse A2 schwenkbar ist. Optional bilden die Lagermittel und Gegenlagermittel der Wiegenlageranordnung eine Gleitlagerung.

Erfindungsgemäß ist die Zwischenpfanne 36 durch das Lagermittel 32 und/oder das Gegenlagermittel 52 relativ zur Gelenkpfanne 51 um die erste Gelenkachse A1 rotationsfixiert. Sie ist unter anderem dadurch relativ zum Gelenkkopf 12 nur zusammen mit der Gelenkpfanne 51 um die erste Gelenkachse A1 rotierbar, nämlich dann, wenn der Stützrahmen 50, beispielweise über ein elektrisches Betätigungsmittel, eine Rotation relativ zum Basisteil 10 ausführt. Durch die Wiegenlageranordnung ist dagegen der Montagerahmen für sich alleine relativ zum Stützrahmen verschwenkbar.

Bei einer Anordnung eines Sichtmittels am Montagerahmen 30, kann über den Montagerahmen so beispielsweise eine Verschwenkbewegung des Sichtmittels um die zweite Gelenkachse, insbesondere in einer Aufwärts- und Abwärtsrichtung erfolgen, während durch die Rotation des Stützrahmens zusammen mit dem Montagerahmen eine Verschwenkbewegung beispielsweise in eine Einwärts- und Auswärtsrichtung um die erste Gelenkachse erfolgen kann. Entsprechend kann das Sichtmittel beispielsweise zwischen einer eingeklappten und einer ausgeklappten Position verschwenkt werden. Es ist aber auch möglich, über diese Anordnung eine Sichtwinkelkorrektur des Sichtmittels am Montagerahmen vorzunehmen, beispielsweise hin zur Karosserie des Fahrzeugs und davon weg. Diese Sichtmittelkorrektur bzw. das Verschwenken des Sichtmittels um die erste Gelenkachse kann unabhängig vom Ein- und Ausklappen zwischen eingeklappter und ausgeklappter Position erfolgen. Optional kombiniert die Vorrichtung also sowohl die Bewegung des Sichtmittels, beispielsweise zwischen einer Betriebs- und einer Parkposition, und einer Justierung, um dem Fahrer einen optimalen Sichtwinkel zu bieten.

Wie insbesondere in den Figs. 1 bis 3 dargestellt, ist zwischen dem Gelenkkopf 12 und der Zwischenpfanne 36 wenigstens ein Gleitring 70 angeordnet, der zwischen dem Gelenkkopf 12 und der Zwischenpfanne 36 eine Gleitlagerung bildet, über die der Montagerahmen 30 relativ zum Basisteil 10 um die erste Gelenkachse A1 gleitend rotierbar ist. Optional bilden dabei die Zwischenpfanne 36 und der Gelenkkopf 12 über den Gleitring 70 eine Presspassung aus, wobei Lagerkräfte insbesondere in Richtung der ersten Gelenkachse A1 vom Montagerahmen 30 bzw. Stützrahmen 50 über den Gleitring 70 auf den Gelenkkopf 12 bzw. das Basisteil 10 abgeleitet werden.

Optional ist der Gleitring 70 derart zwischen dem Gelenkkopf 12 und der Zwischenpfanne 36 angeordnet, dass er eine Gleitlagerung bildet, über die der Montagerahmen 30 und insbesondere die Zwischenpfanne relativ zum Basisteil 10 bzw. dem Gelenckopf um die zweite Achse verschwenkt werden kann, und insbesondere gleitend verschwenkt werden kann. Zwischen Zwischenpfanne, Gleitring und Gelenkkopf kann auch in diesem Fall eine Gleitlagerung ausgebildet sein. Bei einer Bewegung um die zweite Gelenkachse bewegt sich, insbesondere in diesem Fall, optional der Gleitring relativ zum Gelenkkopf und/oder relativ zur Zwischenpfanne um die zweite Gelenkachse. Insbesondere bewegt er sich entlang der Innenwandung der Zwischenpfanne und/oder der Außenwandung des Gelenkkopfes.

Optional bewegt sich der Gleitring, wie erwähnt, bei einem Verschwenken des Montagerahmens 30 um die zweite Gelenkachse A2 in einer Verschwenkbewegung ebenfalls um die zweite Gelenkachse, relativ zur Zwischenpfanne 36 und/oder zum Gelenkkopf 12. Diese Relativbewegung hängt optional unter anderem davon ab, ob der Gleitring 70 an der Zwischenpfanne oder dem Gelenkkopf 12 fixiert ist, wie dies im Folgenden noch im Detail beschrieben werden wird.

Es sei grundsätzlich angemerkt, dass optional die Verschwenkwinkel des Stützrahmens relativ zum Basisrahmen größer ausfallen, als die Verschwenkwinkel zwischen Stützrahmen und Montagerahmen. Die Vorrichtung ist optional derart ausgebildet, dass sich ein Rotationswinkel um die erste Rotationsachse zwischen Stützrahmen 50 und Basisteil 10 ergibt, der um wenigstens 60 Prozent, optional wenigstens 70 Prozent und weiter optional um wenigstens 80 Prozent größer ist, als der Schwenkwinkel des Montagerahmens 30 relativ zum Stützrahmen 50. Da der Montagerahmen 30 am Stützrahmen 50 wiegengelagert ist, gilt dies natürlich auch für den Schwenkwinkel des Montagerahmens 30 relativ zum Basisteil 10 um die zweite Gelenkachse.

Optional ist der Gleitring 70 konzentrisch zur ersten Gelenkachse A1 angeordnet. Optional ist der Gelenkkopf 12 konzentrisch zur ersten Gelenkachse A1 angeordnet und optional sind die Zwischenpfanne und/oder die Gelenkpfanne konzentrisch zur ersten Gelenkachse A1 ausgebildet.

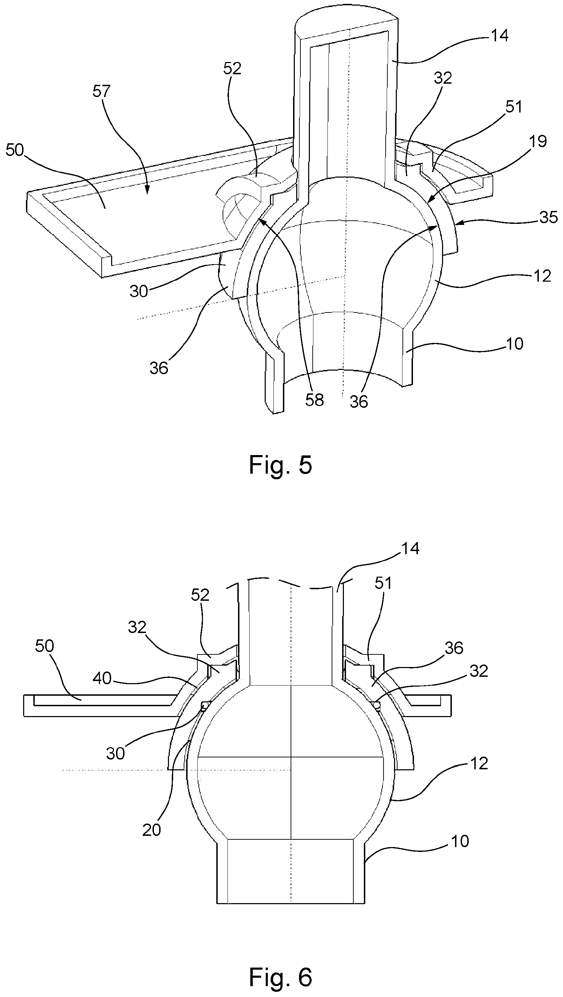

Die Figs. 5 bis 11 zeigen eine weitere Ausführungsform, die der Ausführungsform gemäß den Figs. 1 bis 4 ähnlich, insbesondere identisch ist, in unterschiedlichen Ansichten und Detailansichten. Der Einfachheit halber wird hinsichtlich der grundsätzlichen Bauweise dieser Ausführungsform optional auf die zuvor erwähnten Passagen der zuvor beschriebenen Ausführungsform verwiesen.

Erkennbar ist insbesondere in Fig. 5, dass eine Innenwandung 38 der Zwischenpfanne 36 und eine Außenwandung 19 des Gelenkkopfes 12 unter Bildung eines Relativbewegungsspaltes 20 voneinander beabstandet sind. Der Gleitring 70 ist in diesem Relativbewegungsspalt 20 zwischen der Zwischenpfanne 36 und dem Gelenkkopf 12 unter Lagerpressung gelagert; es bildet sich eine Gleitlagerung zwischen Innenwandung der Zwischenpfanne, Außenwandung des Gelenkkopfes und dem Gleitring aus. Optional ist insbesondere in diesem Zusammenhang der Gleitring aus Metall, Keramik oder Glas hergestellt, wobei er optional eine Brinell-Härte zwischen 200 bis 900 HB aufweist. Auf diese Weise kommt es zu einem geringen Verschleiß des Gleitringes, der konstruktionsbedingt sehr hohe Lasten aufnehmen muss.

Ein entsprechender Relativbewegungsspalt 40 (siehe Fig. 6) kann zwischen der Innenwandung 58 der Gelenkpfanne 51, und der Außenwandung 35 der Zwischenpfanne 36 ausgebildet sein. Dabei garantieren optional die Lagermittel 32 und Gegenlagermittel 52, dass dieser Relativbewegungsspalt 40 während der Schwenkbewegung des Montagerahmens relativ zum Stützrahmen erhalten bleibt. Optional stehen die Gelenkpfanne 51 und die Zwischenpfanne 36 ausschließlich über die entsprechend angeordneten Lagermittel 32 bzw. Gegenlagermittel 52 miteinander in Kontakt. Selbiges gilt optional für die Zwischenpfanne 36 und den Gelenkkopf 12, die ausschließlich über den Gleitring 70 miteinander in Kontakt stehen.

Die erwähnten Relativbewegungsräume 20, 40 garantieren einen reproduzierbaren Gleitwiderstand zwischen den relativ zueinander verschwenkbaren Bauteilen und erlauben darüber hinaus optional den Abtransport von Verschmutzungsteilen, die sich zwischen den jeweiligen Bauteilen ansammeln. Es ist zudem denkbar, entsprechende Gleithilfsmittel, wie beispielsweise Fette, Öle, aber auch Beschichtungen an und zwischen Lagermittel, Gegenlagermittel, Gleitring anzuordnen, die die Gleitlagerung der Bauteile zueinander verbessern.

Wie insbesondere in den Figs. 5 und 6 erkennbar, weisen die Außenwandung 19 des Gelenkkopfes 12 und/oder die Innenwandung 38 der Zwischenpfanne 36 wenigstens abschnittsweise eine um die erste Gelenkachse A1 rotationssymmetrische Geometrie auf, insbesondere eine wenigstens abschnittsweise kugelförmige Geometrie. Bei der hier dargestellten Ausführungsform weisen die jeweiligen Bauteile, also Gelenkkopf 12 und Zwischenpfanne36, Kugelgeometrien mit gemeinsamem Kugelmittelpunkt auf. Sie unterscheiden sich in ihren Radien. Selbiges gilt für die Gelenkpfanne 51, die ebenfalls abschnittsweise eine entsprechend rotationssymmetrische Geometrie und bei dieser Ausführungsform optional eine abschnittsweise kugelförmige Geometrie aufweist. Die jeweiligen Geometrien von Gelenkkopf, Zwischenpfanne und Gelenkpfanne sind wenigstens abschnittsweise komplementär zueinander, sodass eine Sandwich-Anordnung der jeweiligen Bauteile relativ zueinander möglich ist. Es ist denkbar, wenigstens ein Bauteil als abschnittsweise kugelförmiges Bauteil auszubilden, und das entsprechend zugeordnete Bauteil mit einer anderen Geometrie auszuführen. So kann beispielsweise die Zwischenpfanne eine Kegelscheibengeometrie aufweisen, in deren Kegelscheibeninnenseite der Gelenkkopf 12 unter Zwischenschaltung des Gleitrings 70 eingepasst ist. Eine solche Anordnung kann auch zwischen Gelenkpfanne 51 und Zwischenpfanne 36 vorliegen. Auch ist es denkbar, die Geometrien, insbesondere der Zwischenpfanne, wenigstens abschnittsweise derart auszubilden, dass die Innenwandung 38 der Zwischenpfanne einer anderen Geometrie folgt als die Außenwandung 35. So kann beispielsweise wenigstens abschnittsweise innenseitig eine Kugelgeometrie vorgesehen sein, während außenseitig eine davon abweichende Geometrie ausgebildet ist oder umgekehrt.

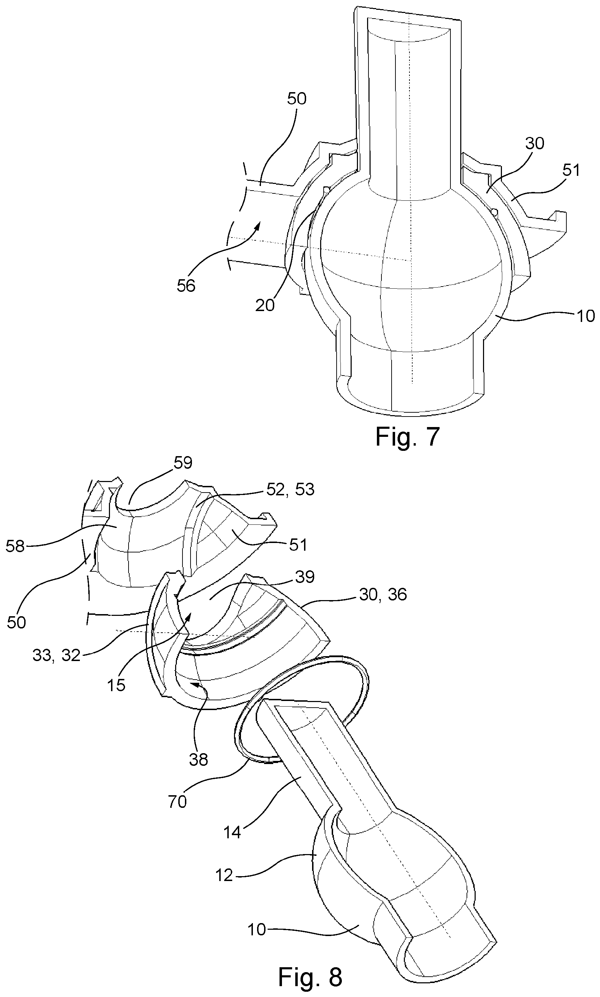

Wie insbesondere in den Figs. 8 bis 10 im Detail dargestellt, weist optional die Zwischenpfanne 36 eine Durchführung 39 auf, über die das Basisteil und insbesondere ein Schaft 14 des Basisteils, zum Stützrahmen 50, optional von einer Außenseite 56 des Stützrahmens 50 zu einer Innenseite 57 (siehe Fig. 3), durchführbar ist. Diese Durchführung 39 weist optional eine Durchführungslänge DL (siehe Fig. 1) auf, die sich in einer Umfangsrichtung U2 um die zweite Gelenkachse A2 entlang der Wandung der Zwischenpfanne erstreckt. Die Durchführung ist derart ausgebildet, dass in dieser Umfangsrichtung U2 ein Schwenkfreiraum 15 zwischen dem Basisteil 10, und insbesondere dem Schaft 14, und der Zwischenpfanne 36 gebildet wird, der eine Bewegung der Zwischenpfanne 36 relativ zum Basisteil 10 bzw. dem Schaft 14 und insbesondere eine Schwenkbewegung um die zweite Gelenkachse A2 erlaubt (siehe dazu auch Fig. 1).

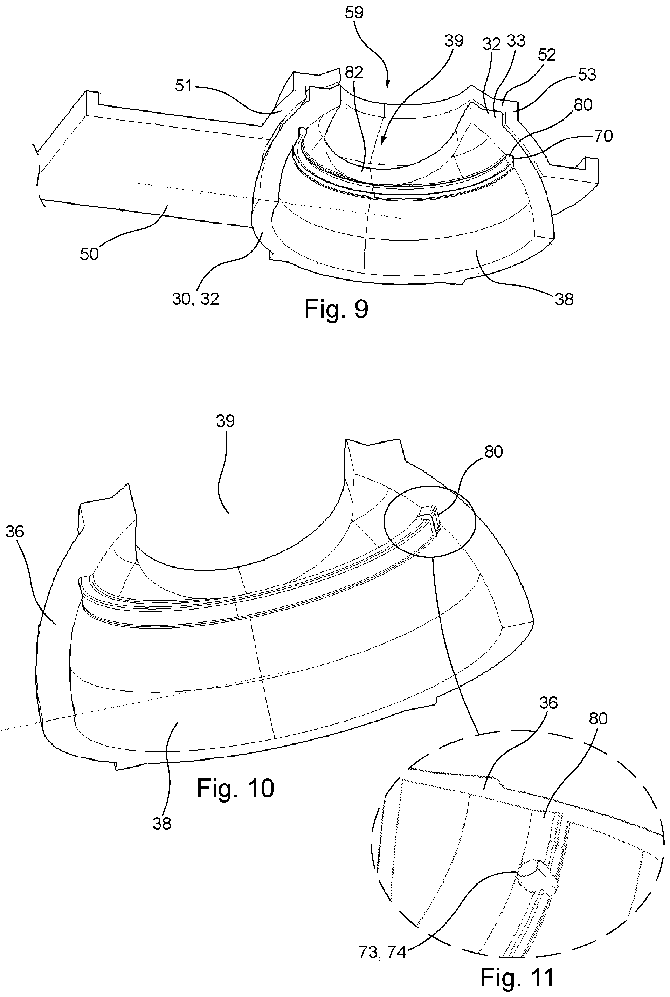

An der Gelenkpfanne 51 ist, wie insbesondere in den Figs. 8 und 9 dargestellt, optional ebenfalls eine Durchführung 59 vorgesehen, über die das Basisteil 10 und insbesondere ein Schaft 14 von der Außenseite 56 in den Innenraum bzw. auf die Innenseite 57 des Stützrahmens 50 führbar ist. Diese Durchführung 59 ist optional konzentrisch zur ersten Gelenkachse A1 angeordnet. Sie umgibt optional den Basisteil 10 und insbesondere seinen Schaft 14 vollständig und insbesondere kreisförmig. Die Durchführung 59 ist optional so ausgebildet, dass sich bei einer Rotation des Stützrahmens 50 relativ zum Basisteil 10 keine Berührung zwischen Stützrahmen 50 und Basisteil 10 ergibt. Die Durchführung kann Anschlag- und insbesondere Führungsmittel aufweisen, die einer Führung des Stützrahmens relativ zum Basisteil bei einer Rotation um die erste Gelenkachse dienen. Die Anschlagmittel können beispielsweise führend mit Gegenanschlagmitteln am Basisteil, insbesondere an einem Schaft desselben anstehen.

Optional ist diese Durchführung 59 so ausgebildet, dass sie die Durchführung 39 und insbesondere eine als Langloch ausgebildete Durchführung 39 der Zwischenpfanne wenigstens teilweise überdeckt. Auf diese Weise wird das Eindringen von Verschmutzungspartikeln verhindert. Grundsätzlich ist es denkbar, zwischen Seitenrändern der Durchführung 39 bzw. 59 Dichtmittel vorzusehen, die wenigstens teilweise mit dem Basisteil 1 und insbesondere dem Schaft in Dichtwirkung stehen.

Optional ist diese Durchführung 39, wie bei dieser Ausführungsform exemplarisch dargestellt, als ein Langloch ausgebildet, das sich in Richtung der Schwenkbewegungsachse A3 (siehe Fig. 2) erstreckt. Diese Schwenkbewegungsachse A3 stellt die Bewegung der Durchführung bzw. von Rändern 82 (siehe Fig. 9) und insbesondere Stirnseitenrändern 82 dar. Diese bewegen sich in Richtung dieser Schwenkbewegungsachse A3. Diese Schwenkbewegungsachse A3 ist bogenförmig ausgeführt, wobei der gebildete Bogen optional ein Zentrum auf der zweiten Gelenkachse A2 aufweist. Optional bewegt sich die Durchführung, und insbesondere ein Stirnseitenrand 82, entlang der Schwenkbewegungsachse A3 bogenförmig um die zweite Gelenkachse A2.

Es ist denkbar, dass insbesondere die Stirnseitenränder 82 dieser Durchführung Blockiermittel aufweisen, sodass ein Schwenkwinkel durch ein Anschlagen dieser Blockiermittel an dem Basisteil 10 und insbesondere seinem Schaft oder einem entsprechend vorgesehenen Gegenanschlagmittel begrenzt wird. Optional sind diese Mittel diametral zur ersten Gelenkachse A1 an der Durchführung angeordnet.

Wie in den Fig. 5 bis 11 exemplarisch dargestellt, ist an der Innenwandung 38 der Zwischenpfanne 36 wenigstens eine, optional zur ersten Gelenkachse A1 konzentrisch verlaufende, obere Lagernut 80 vorgesehen, in der der Gleitring 70 gelagert ist. Insbesondere ist der Gleitring 70 optional gegen eine Bewegung relativ zur Zwischenpfanne 36 in der Aufwärtsrichtung, also in Richtung der ersten Gelenkachse A1 fixiert.

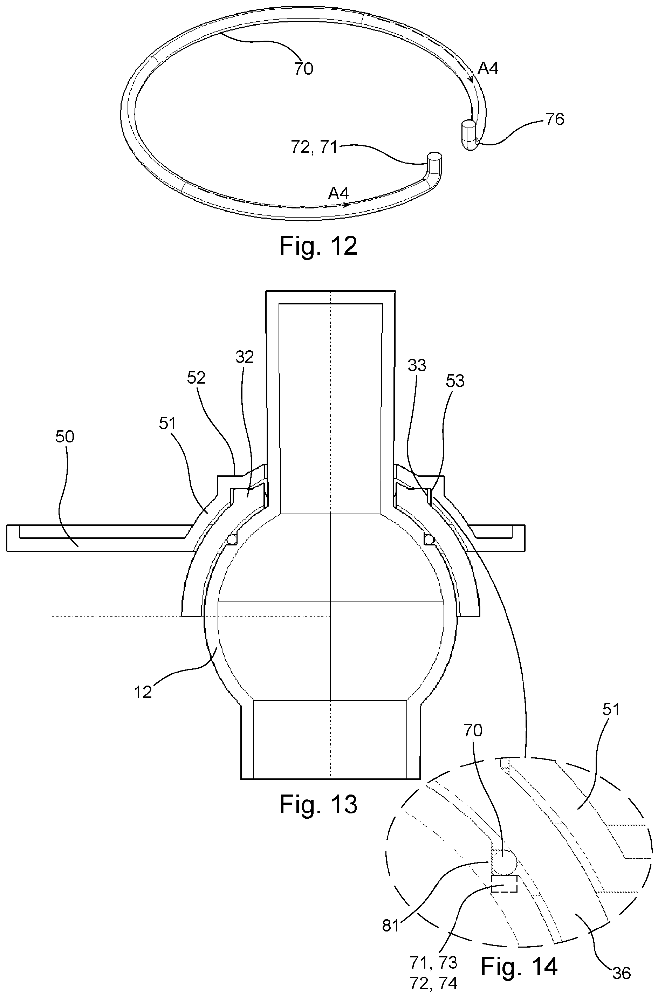

Wie in den Figs. 13 bis 16 zu einer weiteren Ausführungsform dargestellt, ist es alternativ möglich, dass der Gelenkkopf 12 an seiner Außenwandung 19 eine, optional zur ersten Gelenkachse A1 konzentrisch verlaufende, untere Lagernut 81 aufweist, in der der Gleitring 70 gelagert ist, und optional gegen eine Bewegung relativ zum Gelenckopf 12 in einer Abwärtsrichtung, also entlang der ersten Gelenkachse A1, fixiert ist. Ausführungen dieser Lagernuten wurden insbesondere im einleitenden Teil ausgeführt. Über die Lagernuten erfolgt optional eine Fixierung des Gleitrings am Bauteil, an dem die Lagernut ausgebildet ist, sodass sich der Gleitring wenigstens entlang einer Achse zusammen mit dem Bauteil der Lagernut bewegt. Diese Fixierung kann einaxial, aber auch mehraxial ausgebildet sein.

Der Gleitring 70 weist optional ein Fixiermittel 72, und die Zwischenpfanne 36 oder der Gelenkkopf 12 (je nach Ausführungsform gemäß den Figs. 5 bis 11 und 13 bis 16) ein Gegenfixiermittel auf, oder umgekehrt, die miteinander derart in Eingriff stehen, dass der Gleitring 70 relativ zur Zwischenpfanne 36 oder zum Gelenkkopf 12 gegen eine Rotation um die erste Gelenkachse A1 fixiert ist. Fixiermittel und Gegenfixiermittel können so ausgebildet sein, dass der Gleitring relativ zur Zwischenpfanne oder zum Gelenkkopf gegen eine Bewegung insbesondere in Richtung der ersten Gelenkachse A1 fixiert ist. Obiges betrifft eine Ausrichtung, in der der Montagerahmen nicht um die zweite Gelenkachse verschwenkt ist - die bereits erwähnte Neutralstellung.

Optional weist das Fixiermittel 72 wenigstens einen aus der Umlaufachse A4 (siehe Fig. 12), optional der Gleitringebene des Gleitrings 70 hervorstehenden Vorsprung 71, und das Gegenfixiermittel 74 wenigstens eine komplementäre Vorsprungaufnahme 73 auf, oder umgekehrt. In dieser Ausführungsform ist die Vorsprungaufnahme eine Vertiefung, in die der Vorsprung 71 eingeführt werden kann und so den Gleitring 70 insbesondere gegen eine Rotation um die erste Gelenkachse fixiert (siehe Fig. 11). Je nach Ausführungsform kann das Gegenfixiermittel am Gelenkkopf oder der Zwischenpfanne ausgeführt sein. Es ist auch denkbar, ein Gegenfixiermittel am Gleitring, beispielsweise in Form einer Vertiefung, und ein Fixiermittel an der Zwischenpfanne oder dem Gelenkkopf auszubilden, beispielsweise in Form eines zur Vertiefung komplementären Vorsprungs. Für eine solche Ausführungsform gilt all das, was zuvor zu Fixiermittel und Gegenfixiermittel beschrieben wurde.

Es ist denkbar, dass das Gegenfixiermittel 74 oder das Fixiermittel 72 in einer oberen Lagernut an der Zwischenpfanne 36 oder einer unteren Lagernut 81 des Gelenkkopfes 12 angeordnet bzw. ausgebildet sind.

Bei den hier dargestellten Ausführungsformen gemäß den Figs. 5 bis 16 ist der Gleitring optional als ein offener Gleitring 70 ausgebildet. Bei den Ausführungsformen gemäß Figs. 1 bis 4 ist er optional als geschlossener Gleitring ausgebildet. Bei einem offenen Gleitring 70 ist es denkbar, dass wenigstens ein freier Endbereich 76 (siehe Fig. 12) des Gleitrings 70 als Fixiermittel 72, optional als Vorsprung 71 ausgebildet ist, und weiter optional aus der Umlaufachse A4, optional der Gleitringebene des Gleitrings 70 herausgebogen ist. Auch ist es denkbar, dass ein freier Endbereich 76 des Gleitrings abgerundet ist.

Wie bereits erwähnt, sind die unterschiedlichen Ausführungsformen der Lagernuten 80, 81 für den Gleitring in den Figs. 5 bis 11 bzw. 13 bis 16 dargestellt. Bei der Ausführungsform gemäß den Figs. 13 bis 16 ist wenigstens ein Gegenfixiermittel 74 in Form einer Vorsprungaufnahme am Gelenkkopf 12 ausgebildet, in das das komplementäre Fixiermittel 72 bzw. ein umgebogener Vorsprung 71 des Gleitrings 70 fixierend eingreifen kann.

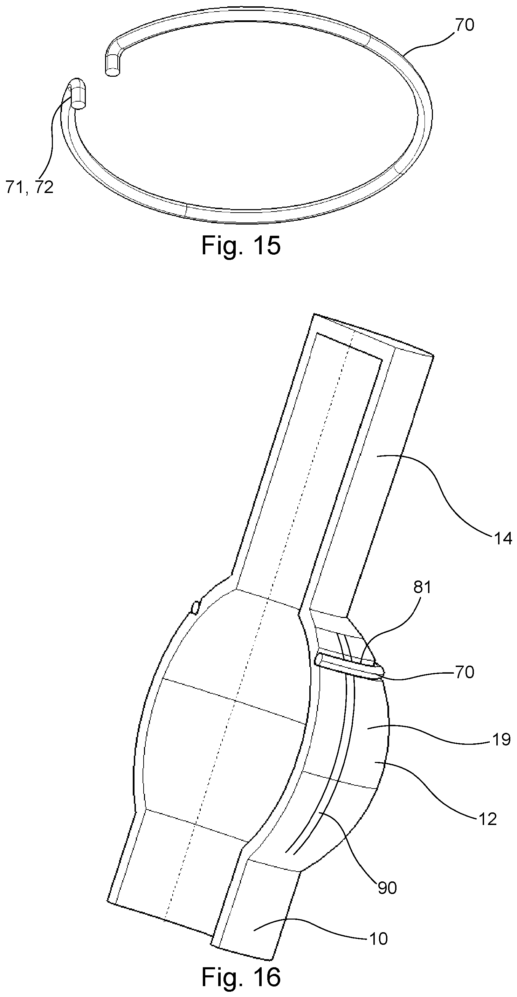

Weiter exemplarisch ist mit Fig. 16 eine Ausführungsform dargestellt, bei der auf einer Außenwandung 19 des Gelenkkopfes wenigstens ein Kanal 90 ausgebildet ist, der einem Abtransport von Verschmutzungsteilen im Bewegungsspielraum 20 dient. Dieser Kanal wird unter Bildung eines Abführfreiraums vom Gleitring 70 überdeckt, sodass auch dort Verschmutzungsteile und insbesondere Partikel nach unten und insbesondere in Richtung der ersten Gelenkachse A1 abgeführt werden können. Eine entsprechende Konstruktion kann auch zwischen der Gelenkpfanne und der Zwischenpfanne ausgebildet sein.

Optional schneiden sich die erste und die zweite Gelenkachse.

Wie insbesondere in den Figs. 1 und 5 bis 7 erkennbar, ist es denkbar, dass die Wiegenlageranordnung derart ausgebildet ist, dass wenigstens ein Lagermittel 32 des Montagerahmens 30 und wenigstens ein Gegenlagermittel 52 des Stützrahmens 50 wenigstens ein Streifenlager bilden, wobei optional ein Lagermittel 32 wenigstens einen insbesondere kreisbogenförmigen konvexen Lagerbogen 34 und/oder ein Gegenlagermittel 52 wenigstens einen, insbesondere kreisbogenförmig, konkaven Lagerbogen 54 aufweist. Diese Bögen stehen miteinander in Kraftkopplung und insbesondere in Gleitlagerkraftkopplung. Bei einer Bewegung des Montagerahmens relativ zum Stützrahmen um die zweite Gelenkachse A2 gleiten die Lagermittel und die Gegenlagermittel relativ zueinander. Optional bilden sie eine Führung. Dazu können insbesondere auch Seitenführungsmittel 33, 53 vorgesehen sein. Sie können eine Führung zwischen Montagerahmens und Stützrahmen bei einem Verschwenken des Montagerahmens um die zweite Gelenkachse bilden. Sie können eine Führung und insbesondere Blockierung gegen eine Bewegung des Montagerahmens relativ zum Stützrahmen entlang der zweiten Gelenkachse bilden.

Es ist auch denkbar, dass Lagermittel 32 und Gegenlagermittel 52 außerhalb des Bereichs von Gelenkpfanne 51, Zwischenpfanne 36 und Gelenkkopf 12 ausgebildet sind. Dies ist exemplarisch in Fig. 1 dargestellt. Bei dieser Ausführungsform weisen diese außerhalb angeordneten Lagermittel Abtriebsgetriebe 31 auf, die insbesondere mit Betätigungsmitteln, die optional im Stützrahmen angeordnet in Kraftkopplung stehen. Insbesondere stehen sie mit Antriebsgetrieben in Kraftkopplung. Abtriebsgetriebe können allerdings auch ohne eine Lagerfunktion ausgeführt sein.

Es ist auch denkbar, dass wenigstens ein Lagermittel 32 an der Außenwandung 38 der Zwischenpfanne 36 und wenigstens ein Gegenlagermittel 52 an der Innenwandung 58 der Gelenkpfanne 51 ausgebildet ist. Optional sind Lagermittel und/oder Gegenlagermittel integral mit ihren jeweiligen zugeordneten Bauteilen, also Zwischenpfanne oder Gelenkpfanne, ausgebildet.

Insbesondere Fig. 6 zeigt, dass es möglich ist, dass wenigstens ein Lagermittel 32 und wenigstens ein Gegenlagermittel 52 Seitenführungsmittel 33, 53 aufweisen, über die eine Fixierung des Lagermittels 32 relativ zum Gegenlagermittel 52, und insofern optional auch des Montagerahmens relativ zum Stützrahmens, gegen eine in Richtung der zweiten Gelenkachse A2 wirkenden Kraftkomponente bereitgestellt wird. Lagermittel und Gegenlagermittel können eine Führung für eine Bewegung des Montagerahmens in einer Richtung um die zweite Gelenkachse bilden. Bei einer in Richtung der zweiten Gelenkachse auf den Montagerahmen oder den Stützrahmen wirkenden Kraft verhindern optional diese Seitenführungsmittel 33, 53 ein Anschlagen der Gelenkpfanne an der Zwischenpfanne und/oder einen Erhalt des Relativbewegungsspaltes 40.

Es ist denkbar, dass eine Bogenachse wenigstens eines als konkaver Lagerbogen 34 ausgebildeten Lagermittels 32 und/oder eine Bogenachse wenigstens eines als konkaver Lagerbogen 54 ausgebildeten Gegenlagermittels 52 um eine Achse koaxial zur zweiten Gelenkachse A2 verläuft. Das bedeutet, dass die Bögen die zweite Gelenkachse wenigstens abschnittsweise kreisbogenförmig umlaufen können. Die jeweiligen Bögen können einen gemeinsamen Bogenmittelpunkt haben, der optional auf der zweiten Gelenkachse liegt.

Optional ist ein Fixiermittel, optional in Form eines Vorspannmittels, hier beispielsweise eine Druckfeder 87 vorgesehen, das die Gelenkpfanne und/oder die Zwischenpfanne gegen den Gelenkkopf drängt, und so eine gleichbleibende Lagerpressung zwischen Zwischenpfanne, Gleitring und Gelenkkopf bewirkt.

Wie insbesondere in den Figs. 1 und 2 dargestellt, ist es denkbar, dass der Montagerahmen 30 relativ zum Stützrahmen 50 über ein Festlegemittel, insbesondere einen Fixierbolzen 55, der sich optional parallel zur zweiten Gelenkachse A2 zwischen dem Montagerahmen 30 und dem Stützrahmen 50 erstreckt, und an diesem über Achslagermittel 59 gelagert ist, gegen eine Bewegung in Richtung der ersten Gelenkachse A1 fixiert ist. Eine solche Fixierung garantiert optional, insbesondere nach Auslösen der zuvor beschriebenen Überlastkupplung, den Zusammenhalt der durch den Fixierbolzen bzw. das Festlegemittel gesicherten Bauteile. Bei dieser Ausführungsform ist das Festlegemittel und insbesondere der Fixierbolzen 55 im Bauteil 84, das hier optional ebenfalls als Lagermittel 32 ausgeführt ist, in einem Langloch (nicht dargestellt) gelagert. Dieses Langloch umläuft optional ebenfalls die zweite Gelenkachse A2 kreisbogenförmig. Bei einem Verschwenken des Montagerahmens 30 relativ zum Stützrahmen 50 kann so das Festlegemittel bzw. der Fixierbolzen 55 quer zu seiner Erstreckungsachse entlanggleiten.

### Bezugszeichenliste

- 1: Vorrichtung
- 10: Basisteil
- 11: Abtriebsgetriebe am Basisteil
- 12: Gelenkkopf
- 13: Aufnahmemittel
- 14: Schaft
- 15: Schwenkfreiraum
- 19: Außenwandung des Gelenkkopfes bzw. außenseitig
- 20: Relativbewegungsspalt
- 30: Montagerahmen
- 31: Abtriebsgetriebe am Montagerahmen
- 32: Lagermittel
- 33: Seitenführungsmittel
- 34: konvexer Lagerbogen
- 35: Außenwandung der Zwischenpfanne bzw. außenseitig
- 36: Zwischenpfanne
- 38: Innenwandung der Zwischenpfanne bzw. innenseitig
- 39: Durchführung
- 40: Relativbewegungsspalt
- 50: Stützrahmen
- 51: Gelenkpfanne
- 52: Gegenlagermittel
- 53: Seitenführungsmittel
- 54: konvexer Lagerbogen
- 55: Festlegemittel, insbesondere Fixierbolzen
- 56: Außenraum bzw. Außenseite des Stützrahmens
- 57: Innenraum bzw. Innenseite des Stützrahmens
- 58: Innenwandung der Gelenkpfanne
- 59: Durchführung
- 59: Achslagermittel
- 70: Gleitring
- 71: Vorsprung
- 72: Fixiermittel
- 73: Vorsprungaufnahme
- 74: Gegenfixiermittel
- 76: freier Endbereich
- 80: obere Lagernut
- 81: untere Lagernut
- 82: Stirnseitenrand der Durchführung
- 84: Bauteil
- 85: Überlastkupplung
- 86: Kupplungsring
- 87: Druckfeder
- 88: Kupplungsring
- 90: Kanal
- 92: Abdeckung
- A1: erste Gelenkachse
- A2: zweite Gelenkachse
- A3: Schwenkbewegungsachse
- A4: Umlaufachse
- DL: Durchführungslänge
- U2: Umfangsrichtung

## Patentansprüche

1. Vorrichtung (1) zum Justieren einer Sichtmittelanordnung, wie beispielsweise einer Spiegelanordnung oder einer Kameraanordnung für ein Kraftfahrzeug, umfassend ein Basisteil (10), einen Montagerahmen (30), und einen Stützrahmen (50), wobei:
das Basisteil (10) insbesondere zum Anbringen an einer Karosserie des Kraftfahrzeugs ausgebildet ist,
der Montagerahmen (30) zur Montage eines Sichtmittels, wie beispielsweise eines Spiegels oder einer Kamera, ausgebildet ist,
der Stützrahmen (50) am Basisteil (10) mittels einer ersten Gelenkanordnung derart angeordnet ist, dass er relativ zum Basisteil (2) nur um eine erste Gelenkachse (A1), die sich in einer im Wesentlichen aufwärts verlaufenden Richtung erstreckt, rotierbar ist, beispielsweise zwischen einer eingeklappten Position, in der der Stützrahmen (50) zum Beispiel im Wesentlichen entlang der Karosserie des Kraftfahrzeugs ausgerichtet ist, und einer ausgeklappten Position, in der der Stützrahmen (50) zum Beispiel im Wesentlichen quer zur Karosserie ausgerichtet ist,
der Montagerahmen (30) am Stützrahmen (50) mittels einer zweiten Gelenkanordnung derart angeordnet ist, dass er relativ zum Stützrahmen (50) nur um eine zweite Gelenkachse (A2), die sich im Wesentlichen quer zur ersten Gelenkachse (A1) erstreckt, schwenkbar ist,
die erste Gelenkanordnung eine Gelenkkopflageranordnung umfasst, mit einem Gelenkkopf (12) am Basisteil (10), und einer Gelenkpfanne (51) am Stützrahmen (50), wobei der Gelenkkopf (12) von der Gelenkpfanne (51) aufgenommen ist, **dadurch gekennzeichnet, dass**
die zweite Gelenkanordnung eine Wiegenlageranordnung umfasst,
mit wenigstens einem am Montagerahmen (30) angeordneten Lagermittel (32), und wenigstens einem am Stützrahmen (50) angeordneten komplementären Gegenlagermittel (52), die derart miteinander in Gleitführung stehen, dass der Montagerahmen (30) relativ zum Stützrahmen (50) nur um die zweite Gelenkachse (A2) schwenkbar ist,
der Montagerahmen (30) eine Zwischenpfanne (36) aufweist, die zwischen der Gelenkpfanne (51) und dem Gelenkkopf (12) angeordnet ist,
die Zwischenpfanne (36) durch das Lagermittel (32) und das Gegenlagermittel (52) relativ zur Gelenkpfanne (51) um die erste Gelenkachse (A1) rotationsfixiert ist und relativ zum Gelenkkopf (12) zusammen mit der Gelenkpfanne (51) um die erste Gelenkachse (A1) rotierbar ist, und wobei
zwischen dem Gelenkkopf (12) und der Zwischenpfanne (36) wenigstens ein Gleitring (70) angeordnet ist, der zwischen dem Gelenkkopf (12) und der Zwischenpfanne (36) eine Gleitlagerung bildet, über die der Montagerahmen (30) relativ zum Basisteil (10) um die erste Gelenkachse (A1) und um die zweite Gelenkachse (A2) gleitend rotierbar ist.

2. Vorrichtung nach Anspruch 1,
**dadurch gekennzeichnet, dass**
eine Innenwandung (38) der Zwischenpfanne (36) und eine Außenwandung (19) des Gelenkkopfes (12) unter Bildung eines Relativbewegungsspaltes (20) von einander beabstandet sind, wobei der Gleitring (70) in diesem Relativbewegungsspalt (20) zwischen Zwischenpfanne (36) und Gelenkkopf (12) unter Lagerpressung gelagert ist.

3. Vorrichtung nach Anspruch 1 oder 2,
**dadurch gekennzeichnet, dass**
der Gleitring (70) aus Metall, Keramik oder Glass hergestellt ist, und optional eine Brinell-Härte zwischen 200-900 HB aufweist.

4. Vorrichtung nach einem der vorhergehenden Ansprüche,
**dadurch gekennzeichnet, dass**
eine Außenwandung (19) des Gelenkkopfs (12) und/oder eine Innenwandung (38) der Zwischenpfanne (36) wenigstens abschnittsweise eine um die erste Gelenkachse (A1) rotationssymmetrische Geometrie aufweist, insbesondere eine wenigstens abschnittsweise kugelförmige Geometrie.

5. Vorrichtung nach einem der vorhergehenden Ansprüche,
**dadurch gekennzeichnet, dass**
die Zwischenpfanne (36) eine Durchführung (39) aufweist, über die ein Schaft (14) des Basisteils (10) zum Stützrahmen (50), optional von einer Außenseite (56) des Stützrahmens (50) zu einer Innenseite (57) durchführbar ist, wobei eine Durchführungslänge (DL) der Durchführung (39), die sich in einer Umfangsrichtung (U2) um die zweite Gelenksachse (A2) auf einer Außenwandung (35) der Zwischenpfanne (36) erstreckt, derart ausgebildet ist, dass in dieser Umfangsrichtung (U2) ein Schwenkfreiraum (15) zwischen dem Schaft (14) des Basisteils (10) und der Zwischenpfanne (36) gebildet wird, der eine Bewegung der Zwischenpfanne (36) relativ zum Schaft (14), und insbesondere eine Schwenkbewegung um die zweite Gelenkachse (A2) erlaubt, wobei optional die Durchführung (39) als ein Langloch ausgebildet ist, das sich in Richtung der Schwenkbewegungsachse (A3) erstreckt.

6. Vorrichtung nach einem der vorhergehenden Ansprüche,
**dadurch gekennzeichnet, dass**
die Zwischenpfanne (36) an einer Innenwandung (38) eine, optional zur ersten Gelenkachse (A1) konzentrisch verlaufende, obere Lagernut (80) aufweist, in der der Gleitring (70) gelagert ist, und optional gegen eine Bewegung relativ zur Zwischenpfanne (36) in der Aufwärtsrichtung fixiert ist, oder
der Gelenkkopf (12) an einer Außenwandung (19) eine, optional zur ersten Gelenkachse (A1) konzentrisch verlaufende, untere Lagernut (81) aufweist, in der der Gleitring (70) gelagert ist, und optional gegen eine Bewegung relativ zum Gelenkkopf (12) in der Abwärtsrichtung und/oder gegen eine Rotation um die erste Gelenkachse (A1) fixiert ist.

7. Vorrichtung nach einem der vorhergehenden Ansprüche,
**dadurch gekennzeichnet, dass**
der Gleitring (70) ein Fixiermittel (72) und die Zwischenpfanne (36) oder der Gelenkkopf (12) ein Gegenfixiermittel (74) aufweisen, oder umgekehrt, die miteinander derart in Eingriff stehen, dass der Gleitring (70) relativ zur Zwischenpfanne (36) bzw. zum Gelenkkopf (12) gegen eine Rotation um die erste Gelenkachse (A1) fixiert ist, wobei optional das Fixiermittel (72) wenigstens einen aus der Umlaufachse (A4), optional der Gleitringebene, des Gleitrings (70) hervorstehenden Vorsprung (71), und das Gegenfixiermittel (74) wenigsten eine komplementäre Vorsprungaufnahme (73) aufweisen, oder umgekehrt.

8. Vorrichtung nach einem der vorhergehenden Ansprüche,
**dadurch gekennzeichnet, dass**
der Gleitring (70) ein offener Gleitring (70) ist, wobei optional wenigstens ein freier Endbereich (76) des Gleitrings (70) als Fixiermittel (72), optional als Vorsprung (71) ausgebildet ist, und weiter optional aus seiner Umlaufachse (A4), optional der Gleitringebene des Gleitrings (70) herausgebogen ist, und/oder wobei optional ein freier Endbereich (76) des Gleitrings (70) abgerundet ist.

9. Vorrichtung nach einem der vorhergehenden Ansprüche,
**dadurch gekennzeichnet, dass**
die Wiegenlageranordnung derart ausgebildet ist, dass wenigstens ein Lagermittel (32) des Montagerahmens (30) und wenigstens ein Gegenlagermittel (52) des Stützrahmens (50) wenigstens ein Streifenlager bilden, wobei optional ein Lagermittel (32) wenigstens einen insbesondere kreisbogenförmigen, konvexen Lagerbogen (34), und/oder ein Gegenlagermittel (52) wenigstens einen, insbesondere kreisbogenförmigen, konkaven Lagerbogen (54) aufweist.

10. Vorrichtung nach einem der vorhergehenden Ansprüche, insbesondere Anspruch 9,
**dadurch gekennzeichnet, dass**
wenigstens ein Lagermittel (32) an einer Außenwandung (38) der Zwischenpfanne (36), und wenigstens ein Gegenlagermittel (52) an einer Innenwandung (58) der Gelenkpfanne (51) ausgebildet ist.

11. Vorrichtung nach einem der vorhergehenden Ansprüche, insbesondere einem der Ansprüche 9 oder 10,
**dadurch gekennzeichnet, dass**
wenigstens ein Lagermittel (32) und wenigstens ein Gegenlagermittel (52) Seitenführungsmittel (33, 53) aufweisen, über die eine Fixierung des Lagermittels (32) relativ zum Gegenlagermittel (52) in Richtung der zweiten Gelenkachse (A2) bereitgestellt wird.

12. Vorrichtung nach einem der vorhergehenden Ansprüche,
**dadurch gekennzeichnet, dass**
der Montagerahmen (30) relativ zum Stützrahmen (50) über wenigstens ein Festlegemittel, insbesondere einen Fixierbolzen (55), der sich parallel zur zweiten Gelenkachse (A2) zwischen dem Montagerahmen (30) und dem Stützrahmen (50) erstreckt und an diesen über Achslagermittel (59) gelagert ist, gegen eine Bewegung in Richtung der ersten Gelenkachse (A1) fixiert ist.

13. Vorrichtung nach einem der vorhergehenden Ansprüche,
**dadurch gekennzeichnet, dass**
die Vorrichtung ein, optional elektrisches, erstes Betätigungsmittel umfasst, mit einem Antriebsgetriebe, das mit einem Abtriebsgetriebe (11) am Basisteil (10), insbesondere an einem Schaft (14), diesen wenigstens teilweise umgebend, in Kraftkopplung steht, so dass der Stützrahmen (50) relativ zum Basisteil (10) rotierbar ist, und/oder
ein, optional elektrisches, zweites Betätigungsmittel umfasst, mit einem Antriebsgetriebe, das mit einem Abtriebsgetriebe (31) am Montagerahmen (30), und insbesondere an wenigstens einem Lagermittel (32) des Montagerahmens (30), in Kraftkopplung steht, so dass der Montagerahmen (30) relativ zum Stützrahmen (50) schwenkbar ist, wobei beide Betätigungsmittel am Stützrahmen (50) angeordnet sind.

14. Vorrichtung nach einem der vorhergehenden Ansprüche,
**dadurch gekennzeichnet, dass**
der Montagerahmen (30) den Stützrahmen (50) wenigstens teilweise umschließt, und optional der Stützrahmen (50) in Form einer Wiege innerhalb des Montagerahmens (30) angeordnet und gelagert ist.

15. Sichtmitteleinrichtung, versehen mit einer Vorrichtung (1) nach einem der Ansprüche 1 bis 14.

16. Fahrzeug, versehen mit einer Vorrichtung (1) nach einem der Ansprüche 1 bis 14.

## Claims

1. Device (1) for adjusting a viewing means arrangement, such as for example a mirror arrangement or a camera arrangement for a motor vehicle, comprising a base part (10), a mounting frame (30), and a support frame (50), wherein:
the base part (10) is designed in particular for attaching to a body of the motor vehicle,
the mounting frame (30) is designed for mounting a viewing means, such as a mirror or a camera,
the support frame (50) is arranged on the base part (10) by means of a first joint arrangement such that it can rotate relative to the base part (2) only about a first joint axis (A1), which extends in a substantially upward direction, for example between a folded-in position in which the support frame (50) is aligned substantially along the body of the motor vehicle, for example, and a folded-out position, in which the support frame (50) is aligned substantially transversely to the body, for example,
the mounting frame (30) is arranged on the support frame (50) by means of a second joint arrangement such that it can be pivoted relative to the support frame (50) only about a second joint axis (A2), which extends substantially transversely to the first joint axis (A1),
the first joint arrangement comprises a joint head bearing arrangement, with a joint head (12) on the base part (10) and a joint socket (51) on the support frame (50), wherein the joint head (12) is received by the joint socket (51), **characterised in that**
the second joint arrangement comprises a cradle bearing arrangement, with at least one bearing means (32) arranged on the mounting frame (30), and at least one complementary counter bearing means (52) arranged on the support frame (50), which are in sliding guide with one another such that the mounting frame (30) can only pivot relative to the support frame (50) about the second joint axis (A2),
the mounting frame (30) has an intermediate socket (36) which is arranged between the joint socket (51) and the joint head (12),
the intermediate socket (36) is rotationally fixed by the bearing means (32) and the counter bearing means (52) relative to the joint socket (51) about the first joint axis (A1) and can be rotated relative to the joint head (12) together with the joint socket (51) about the first joint axis (A1), and wherein
at least one sliding ring (70) is arranged between the joint head (12) and the intermediate socket (36), forming a sliding bearing between the joint head (12) and the intermediate socket (36), via which the mounting frame (30) can be rotated in a sliding manner relative to the base part (10) about the first joint axis (AI) and about the second joint axis (A2).

2. Device according to claim 1,
**characterised in that** an inner wall (38) of the intermediate socket (36) and an outer wall (19) of the joint head (12) are spaced apart from each other to form a relative movement gap (20), wherein the sliding ring (70) is mounted in this relative movement gap (20) between the intermediate socket (36) and the joint head (12) under bearing pressure.

3. Device according to claim 1 or 2,
**characterised in that**
the sliding ring (70) is made of metal, ceramic or glass, and optionally has a Brinell hardness between 200-900 HB.

4. Device according to any one of the preceding claims,
**characterised in that**
an outer wall (19) of the joint head (12) and/or an inner wall (38) of the intermediate socket (36) has at least in sections a rotationally symmetrical geometry about the first joint axis (A1), in particular, a geometry that is spherical at least in sections .

5. Device according to any one of the preceding claims,
**characterised in that**
the intermediate socket (36) has a feed-through (39), via which a shaft (14) of the base part (10) can be fed through to the support frame (50), optionally from an outer side (56) of the support frame (50) to an inner side (57), wherein the feed-through length (DL) of the feed-through (39) extends in a circumferential direction (U2) about the second joint axis (A2) on an outer wall (35) of the intermediate socket (36), such that in this circumferential direction (U2) a pivot clearance (15) is created between the shaft (14) of the base part (10) and the intermediate socket (36), allowing a movement of the intermediate socket (36) relative to the shaft (14), and in particular a pivoting movement about the second joint axis (A2), wherein optionally the feed-through (39) is designed as an elongated hole that extends in the direction of the pivoting movement axis (A3).

6. Device according to any one of the preceding claims,
**characterised in that**
the intermediate socket (36) has an upper bearing groove (80) on an inner wall (38), which optionally runs concentrically to the first joint axis (AI), in which the sliding ring (70) is mounted, and is optionally fixed against a movement relative to the intermediate socket (36) in the upward direction, or
the joint head (12) has a lower bearing groove (81) on an outer wall (19), optionally running concentrically to the first joint axis (AI), in which the sliding ring (70) is mounted, and is optionally fixed against movement relative to the joint head (12) in the downward direction and/or against a rotation about the first joint axis (AI).

7. Device according to any one of the preceding claims,
**characterised in that**
the sliding ring (70) has a fixing means (72) and the intermediate socket (36) or the joint head (12) has a counter-fixing means (74), or vice versa, which engage with each other in such a way that the sliding ring (70) is fixed relative to the intermediate socket (36) or the joint head (12) against a rotation about the first joint axis (AI), wherein the fixing means (72) optionally has at least one projection (71) protruding from the rotational axis (A4), optionally from the sliding ring plane of the sliding ring (70), and the counter-fixing means (74) has at least one complementary projection receptacle (73), or vice versa.

8. Device according to any one of the preceding claims,
**characterised in that**
the sliding ring (70) is an open sliding ring (70), wherein optionally at least one free end region (76) of the sliding ring (70) is designed as fixing means (72), optionally as projection (71), and further optionally is bent out from its rotational axis (A4), optionally from the sliding ring plane of the sliding ring (70), and/or wherein optionally a free end region (76) of the sliding ring (70) is rounded.

9. Device according to any one of the preceding claims,
**characterised in that**
the cradle bearing arrangement is designed such that at least one bearing means (32) of the mounting frame (30) and at least one counter bearing means (52) of the support frame (50) form at least one strip bearing, wherein optionally a bearing means (32) has at least one, in particular circular arc-shaped, convex bearing arc (34), and/or a counter bearing means (52) has at least one, in particular circular arc-shaped, concave bearing arc (54).

10. Device according to any one of the preceding claims, in particular claim 9,
**characterised in that**
at least one bearing means (32) is formed on an outer wall (38) of the intermediate socket (36), and at least one counter bearing means (52) is formed on an inner wall (58) of the joint socket (51).

11. Device according to any one of the preceding claims, in particular any one of claims 9 or 10,
**characterised in that**
at least one bearing means (32) and at least one counter bearing means (52) have lateral guide means (33, 53), via which a fixation of the bearing means (32) relative to the counter bearing means (52) is provided in the direction of the second joint axis (A2).

12. Device according to any one of the preceding claims,
**characterised in that**
the mounting frame (30) is fixed relative to the support frame (50) against a movement in the direction of the first joint axis (AI) via at least one fixing means, in particular a fixing bolt (55), which extends parallel to the second joint axis (A2) between the mounting frame (30) and the support frame (50) and is supported on the latter via axle bearing means (59).

13. Device according to any one of the preceding claims,
**characterised in that**
the device comprises an optionally electric first actuating means with a drive gear that is in force coupling with an output gear (11) on the base part (10), in particular on a shaft (14), at least partially surrounding it, so that the support frame (50) can be rotated relative to the base part (10), and/or
comprises an optionally electric second actuating means, with a drive gear that is in force coupling with an output gear (31) on the mounting frame (30), and in particular on at least one bearing means (32) of the mounting frame (30), so that the mounting frame (30) can pivot relative to the support frame (50), wherein both actuating means are arranged on the support frame (50).

14. Device according to any one of the preceding claims,
**characterised in that**
the mounting frame (30) at least partially encloses the support frame (50), and optionally the support frame (50) is arranged and mounted in the form of a cradle within the mounting frame (30).

15. Viewing means equipment, provided with a device (1) according to any one of claims 1 to 14.

16. Vehicle, provided with a device (1) according to any one of claims 1 to 14.

## Revendications

1. Dispositif (1) pour régler un agencement de visualisation, par exemple un agencement à miroir ou un agencement à caméra pour un véhicule automobile, comprenant une partie de base (10), un cadre de montage (30) et un cadre de support (50) :
la partie de base (10) étant conçue en particulier pour être fixée à une carrosserie du véhicule automobile,
le cadre de montage (30) étant conçu pour le montage d'un moyen de visualisation, par exemple un rétroviseur ou une caméra,
le cadre de support (50) étant agencé sur la partie de base (10) au moyen d'un premier agencement d'articulation de telle sorte qu'il ne peut pivoter par rapport à la partie de base (2) qu'autour d'un premier axe d'articulation (A1) qui s'étend dans une direction essentiellement ascendante, par exemple entre une position repliée dans laquelle le cadre de support (50) est par exemple aligné essentiellement le long de la carrosserie du véhicule automobile et une position déployée dans laquelle le cadre de support (50) est par exemple aligné essentiellement transversalement à la carrosserie,
le cadre de montage (30) étant agencé sur le cadre de support (50) au moyen d'un deuxième agencement d'articulation de telle sorte qu'il ne peut pivoter par rapport au cadre de support (50) qu'autour d'un deuxième axe d'articulation (A2) qui s'étend essentiellement transversalement par rapport au premier axe d'articulation (A1),
le premier agencement d'articulation comprenant un agencement de palier à tête d'articulation, avec une
tête d'articulation (12) sur la partie de base (10) et une cuvette d'articulation (51) sur le cadre de support (50),
la tête d'articulation (12) étant logée dans la cuvette d'articulation (51), **caractérisé en ce que**
le deuxième agencement d'articulation comprend un agencement de palier en berceau, avec au moins un moyen de palier (32) agencé sur le cadre de montage (30) et au moins un moyen de contre-palier (52) agencé sur le cadre de support (50), qui sont en guidage coulissant l'un avec l'autre de telle sorte que le cadre de montage (30) ne peut pivoter par rapport au cadre de support (50) qu'autour du deuxième axe d'articulation (A2),
le cadre de montage (30) présente une cuvette intermédiaire (36) qui est agencée entre la cuvette d'articulation (51) et la tête d'articulation (12),
la cuvette intermédiaire (36) est immobilisée en rotation par rapport à la cuvette d'articulation (51) autour du premier axe d'articulation (A1) par le moyen de palier (32) et le moyen de contre-palier (52) et pouvant tourner autour du premier axe d'articulation (A1) par rapport à la tête d'articulation (12) conjointement avec la cuvette d'articulation (51) et
au moins une bague coulissante (70) étant agencée entre la tête d'articulation (12) et la cuvette intermédiaire (36) qui forme, entre la tête d'articulation (12) et la cuvette intermédiaire (36), un palier lisse par l'intermédiaire duquel le cadre de montage (30) peut pivoter de manière coulissante par rapport à la partie de base (10) autour du premier axe d'articulation (A1) et autour du deuxième axe d'articulation (A2).

2. Dispositif selon la revendication 1,
**caractérisé en ce qu'**une paroi intérieure (38) de la cuvette intermédiaire (36) et une paroi extérieure (19) de la tête d'articulation (12) sont espacées l'une de l'autre en formant un interstice de mouvement relatif (20), la bague coulissante (70) étant logée dans cet interstice de mouvement relatif (20) entre la cuvette intermédiaire (36) et la tête d'articulation (12) sous une pression de palier.

3. Dispositif selon la revendication 1 ou 2, **caractérisé en ce que**
la bague coulissante (70) est fabriquée en métal, en céramique ou en verre et présente, en option, une dureté Brinell comprise entre 200 et 900 HB.

4. Dispositif selon l'une des revendications précédentes, **caractérisé en ce**
**qu'**une paroi extérieure (19) de la tête d'articulation (12) et/ou une paroi intérieure (38) de la cuvette intermédiaire (36) présente au moins par sections une géométrie à symétrie de révolution autour du premier axe d'articulation (A1), en particulier une géométrie au moins partiellement sphérique.

5. Dispositif selon l'une des revendications précédentes, **caractérisé en ce que**
la cuvette intermédiaire (36) présente un passage (39) à travers lequel une tige (14) de la partie de base (10) peut être guidée vers le cadre de support (50), éventuellement depuis un côté extérieur (56) du cadre de support (50) vers un côté intérieur (57), une longueur de passage (DL) du passage (39), qui s'étend dans une direction circonférentielle (U2) autour du deuxième axe d'articulation (A2) sur une paroi extérieure (35) de la cuvette intermédiaire (36), étant conçue de telle sorte que, dans cette direction circonférentielle (U2), un espace de pivotement (15) soit formé entre la tige (14) de la partie de base (10) et la cuvette intermédiaire (36), lequel permet un mouvement de la cuvette intermédiaire (36) par rapport à la tige (14), et en particulier un mouvement de pivotement autour du deuxième axe d'articulation (A2), le passage (39) étant éventuellement conçu comme un trou oblong s'étendant dans la direction de l'axe de mouvement de pivotement (A3).

6. Dispositif selon l'une des revendications précédentes, **caractérisé en ce que**
la cuvette intermédiaire (36) présente, sur une paroi intérieure (38), une rainure de palier supérieure (80) s'étendant de manière concentrique par rapport au premier axe d'articulation (A1), dans laquelle est logée la bague coulissante (70) et qui est éventuellement immobilisée contre tout mouvement par rapport à la cuvette intermédiaire (36) dans le sens ascendant, ou
la tête d'articulation (12) présente, sur une paroi extérieure (19), une rainure de palier inférieure (81) éventuellement concentrique par rapport au premier axe d'articulation (A1), dans laquelle est montée la bague coulissante (70) et dans laquelle celle-ci est éventuellement immobilisée contre un mouvement vers la base par rapport à la tête d'articulation (12) et/ou contre une rotation autour du premier axe d'articulation (A1).

7. Dispositif selon l'une des revendications précédentes, **caractérisé en ce que**
la bague coulissante (70) présente un moyen de fixation (72) et la cuvette intermédiaire (36) ou la tête d'articulation (12) présente un moyen de contre-fixation (74), ou inversement, qui s'engagent l'un dans l'autre de telle sorte que la bague coulissante (70) est immobilisée par rapport à la cuvette intermédiaire (36) ou à la tête d'articulation (12) contre une rotation autour du premier axe d'articulation (A1), le moyen de fixation (72) présentant, éventuellement, au moins une saillie (71) dépassant de l'axe de rotation (A4) de la bague coulissante (70), éventuellement du plan de la bague coulissante et le moyen de contre-fixation (74) présentant au moins un logement de saillie complémentaire (73), ou inversement.

8. Dispositif selon l'une des revendications précédentes, **caractérisé en ce que**
la bague coulissante (70) est une bague coulissante ouverte (70), au moins une zone d'extrémité libre (76) de la bague coulissante (70) étant éventuellement conçue comme moyen de fixation (72), éventuellement comme saillie (71), et étant en outre éventuellement courbée à partir de son axe de rotation (A4), éventuellement hors du plan de la bague coulissante (70), et/ou une zone d'extrémité libre (76) de la bague coulissante (70) étant éventuellement arrondie.

9. Dispositif selon l'une des revendications précédentes, **caractérisé en ce que**
l'agencement de palier en berceau est conçu de telle manière qu'au moins un moyen de palier (32) du cadre de montage (30) et au moins un moyen de contre-palier (52) du cadre de support (50) forment au moins un palier à bande, un moyen de palier (32) présentant éventuellement au moins un arc de palier (34) convexe, en particulier en forme d'arc de cercle, et/ou un moyen de contre-palier (52) présentant au moins un arc de palier concave (54), en particulier en forme d'arc de cercle.

10. Dispositif selon l'une des revendications précédentes, en particulier la revendication 9,
**caractérisé en ce**
**qu'**au moins un moyen de palier (32) est formé sur une paroi extérieure (38) de la cuvette intermédiaire (36) et au moins un moyen de contre-palier (52) est formé sur une paroi intérieure (58) de la cuvette d'articulation (51).

11. Dispositif selon l'une des revendications précédentes, en particulier l'une des revendications 9 ou 10,
**caractérisé en ce qu'**au moins un moyen de palier (32) et au moins un moyen de contre-palier (52) présentent des moyens de guidage latéral (33, 53) qui permettent d'immobiliser le moyen de palier (32) par rapport au moyen de contre-palier (52) dans la direction du deuxième axe d'articulation (A2).

12. Dispositif selon l'une des revendications précédentes,
**caractérisé en ce que**
le cadre de montage (30) est relié au cadre de support (50) par au moins un moyen de fixation, en particulier un boulon de fixation (55) qui s'étend parallèlement au deuxième axe d'articulation (A2) entre le cadre de montage (30) et le cadre de support (50) et qui est monté sur celui-ci par l'intermédiaire de moyens de palier d'axe (59), contre un mouvement dans la direction du premier axe d'articulation (A1).

13. Dispositif selon l'une des revendications précédentes, **caractérisé en ce que**
le dispositif comprend un premier moyen d'actionnement, éventuellement électrique, avec un engrenage d'entraînement qui est en prise de force avec un engrenage de sortie (11) sur la partie de base (10), en particulier sur une tige (14), l'entourant au moins partiellement, de sorte que le cadre de support (50) peut tourner par rapport à la partie de base (10), et/ou
comprend un deuxième moyen d'actionnement, éventuellement électrique, avec un engrenage d'entraînement qui est en prise de force avec un engrenage de sortie (31) sur le cadre de montage (30), et en particulier sur au moins un moyen de palier (32) du cadre de montage (30), de sorte que le cadre de montage (30) peut pivoter par rapport au cadre de support (50), les deux moyens d'actionnement étant agencés sur le cadre de support (50).

14. Dispositif selon l'une des revendications précédentes, **caractérisé en ce que**
le cadre de montage (30) entoure au moins partiellement le cadre de support (50) et, en option, le cadre de support (50) est agencé et monté sous la forme d'un berceau à l'intérieur du cadre de montage (30).

15. Dispositif de visualisation équipé d'un dispositif (1) selon l'une des revendications 1 à 14.

16. Véhicule équipé d'un dispositif (1) selon l'une des revendications 1 à 14.
